(19) Europäisches Patentamt
European Patent Office
Office européen des brevets

(11) EP 4 693 437 A1

(12) # EUROPEAN PATENT APPLICATION
published in accordance with Art. 153(4) EPC

(43) Date of publication:
**11.02.2026 Bulletin 2026/07**

(21) Application number: **24883836.9**

(22) Date of filing: **07.05.2024**

(51) International Patent Classification (IPC):
***H01M 4/13*** *(2010.01)* ***H01M 4/62*** *(2006.01)*

(52) Cooperative Patent Classification (CPC):
**H01M 4/13; H01M 4/62; H01M 10/052; H01M 10/058; H01M 10/42;** Y02E 60/10

(86) International application number:
**PCT/CN2024/091420**

(87) International publication number:
**WO 2025/091823 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.11.2023 CN 202311460439**

(71) Applicant: **Contemporary Amperex Technology Co., Limited**
**Ningde, Fujian 352100 (CN)**

(72) Inventors:
- **LI, Baiqing**
**Ningde, Fujian 352100 (CN)**
- **PENG, Shuangjuan**
**Ningde, Fujian 352100 (CN)**
- **PENG, Lin**
**Ningde, Fujian 352100 (CN)**
- **JIN, Haizu**
**Ningde, Fujian 352100 (CN)**
- **ZHAO, Fenggang**
**Ningde, Fujian 352100 (CN)**
- **WU, Kai**
**Ningde, Fujian 352100 (CN)**

(74) Representative: **Lorenz Seidler Gossel Part. mbB**
**Widenmayerstr. 23**
**80538 München (DE)**

(54) **ELECTRODE SHEET, BATTERY AND ELECTRIC DEVICE**

(57) An electrode plate, a battery, and an electric apparatus are provided. The electrode plate includes a current collector and a film layer disposed on at least one side of the current collector, the film layer including an active material and multiple fluorinated polymers. Among the multiple fluorinated polymers, one fluorinated polymer has a crystallinity denoted as $X_{c1}$%, and a cold crystallization temperature denoted as $T_{c1}$°C, and among the multiple fluorinated polymers, another fluorinated polymer has a crystallinity denoted as $X_{c2}$%, and a cold crystallization temperature denoted as $T_{c2}$°C. The multiple fluorinated polymers satisfy: $20\% \leq (X_{c2} - X_{c1})/X_{c1} < 400\%$, and $30\% \leq (T_{c2} - T_{c1})/T_{c1} < 250\%$.

5

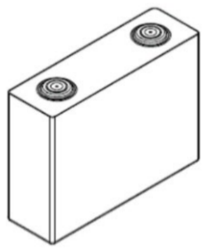

FIG. 1

EP 4 693 437 A1

## Description

### CROSS-REFERENCE TO RELATED APPLICATIONS

The present application claims priority to Chinese Patent Application No. 202311460439.8, filed on November 3, 2023, entitled "ELECTRODE PLATE, BATTERY, AND ELECTRIC APPARATUS," the entire content of which is incorporated herein by reference.

### TECHNICAL FIELD

The present application relates to an electrode plate, a battery, and an electric apparatus.

### BACKGROUND

Batteries have characteristics such as high capacity and long lifespan, and thus are widely used in electronic devices, such as mobile phones, laptop computers, electric scooters, electric vehicles, electric airplanes, electric ships, electric toy cars, electric toy ships, electric toy airplanes, and electric tools.

As the application range of batteries becomes increasingly broad, the requirements for battery performance are becoming more stringent. However, the cycle life and storage life of batteries remain relatively poor and need further improvement.

### SUMMARY

The present application is made in view of the above issues, with the objective of providing an electrode plate, a battery, and an electric apparatus.

According to a first aspect, the present application provides an electrode plate, where the electrode plate includes a current collector and a film layer disposed on at least one side of the current collector, the film layer including an active material and multiple fluorinated polymers,

where among the multiple fluorinated polymers, one fluorinated polymer has a crystallinity denoted as $X_{c1}$%, and a cold crystallization temperature denoted as $T_{c1}$°C; and
among the multiple fluorinated polymers, another fluorinated polymer has a crystallinity denoted as $X_{c2}$%, and a cold crystallization temperature denoted as $T_{c2}$°C,
where the multiple fluorinated polymers satisfy: $20\% \le (X_{c2} - X_{c1})/X_{c1} < 400\%$, and $30\% \le (T_{c2} - T_{c1})/T_{c1} < 250\%$.

Thus, in embodiments of the present application, the crystallinity $X_{c1}$% of the first fluorinated polymer is relatively low, and the cold crystallization temperature $T_{c1}$°C is relatively low, resulting in greater flexibility of the molecular chain, which is more conducive to the first fluorinated polymer forming an in-situ gel on the surface of active material particles, thereby improving the solid-liquid interface performance. The first fluorinated polymer and the second fluorinated polymer have similar structures. As compared with the first fluorinated polymer, the second fluorinated polymer has a relatively higher crystallinity $X_{c2}$% and a relatively higher cold crystallization temperature $T_{c2}$°C, requiring more energy to overcome intermolecular constraints, which is more conducive to enhancing its own cohesive energy density, thereby reducing swelling deformation, and improving the binding strength between active material. Thus, through the cooperation of the multiple fluorinated polymers, the embodiments of the present application can effectively improve the cycling performance and storage performance of battery cells.

In some embodiments, $40\% \le (X_{c2} - X_{c1})/X_{c1} < 400\%$; optionally, $X_{c2} - X_{c1} \ge 10$; and further optionally, $10 \le X_{c2} - X_{c1} \le 45$. Through further selection of the crystallinity and cold crystallization temperature of the fluorinated polymers, the embodiments of the present application can further enhance the cycling performance and storage performance when the electrode plate is applied to battery cells.

In some embodiments, $0 < X_{c1} \le 28$; and/or $30 \le X_{c2} \le 50$.

In some embodiments, $35\% \le (T_{c2} - T_{c1})/T_{c1} < 250\%$; optionally, $T_{c2} - T_{c1} \ge 25$; and further optionally, $25 \le T_{c2} - T_{c1} \le 100$.

In some embodiments, further optionally, $35 < T_{c1} \le 100$; and/or $115 \le T_{c2} \le 140$.

In some embodiments, each fluorinated polymer among the multiple fluorinated polymers independently includes at least one of a compound represented by formula (AI) to a compound represented by formula (AIII),

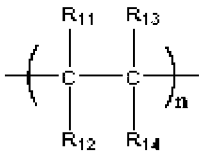 formula (AI), 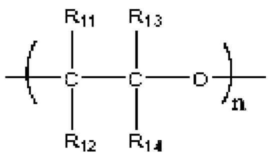 formula (AII),

where in formula (AI) and formula (AII), $R_{11}$, $R_{12}$, $R_{13}$, and $R_{14}$ each independently include a hydrogen atom, a fluorine atom, a chlorine atom, a bromine atom, a substituted or unsubstituted C1-C3 alkyl, or a substituted or unsubstituted C1-C3 alkoxy, and at least one of $R_{11}$, $R_{12}$, $R_{13}$, and $R_{14}$ includes a fluorine atom;

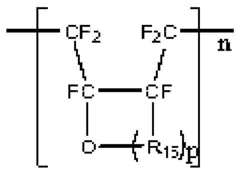 formula (AIII),

where in formula (AIII), $R_{15}$ includes a single bond or a substituted or unsubstituted C1-C3 alkyl;
p is selected from positive integers from 1 to 3; and
n is selected from positive integers from 1000 to 30000.

In some embodiments, among the multiple fluorinated polymers, one fluorinated polymer has a molecular weight of $W_1$ g/mol, and among the multiple fluorinated polymers, another fluorinated polymer has a molecular weight of $W_2$ g/mol, where the multiple fluorinated polymers satisfy: $0 < W_1/W_2 < 1$; and optionally, $2.0\times10^5 \leq W_1 \leq 1.0\times10^6$ and $5.0\times10^5 \leq W_2 \leq 1.2\times10^6$. The first fluorinated polymer has a relatively lower molecular weight and stronger affinity with the solvent, but a higher risk of being dispersed by the solvent, which is not conducive to controlling its positional distribution. The second fluorinated polymer has a relatively higher molecular weight, longer molecular chain segments, an increased probability of contact and entanglement between molecular chain segments, and enhanced intermolecular forces, which can improve the binding strength between active materials and significantly reduce interactions with solvent molecules, thereby making it easier to control its dispersion position. The combination of the two is more conducive to balancing the improvement of interfacial side reactions and structural stability in the positive electrode plate, thereby enhancing the cycling performance and storage performance of battery cells.

In some embodiments, based on a total mass of the film layer, a total mass content of the multiple fluorinated polymers is ≤ 5%; optionally, 0.05% to 5%; optionally, based on the total mass of the film layer, a mass content of the first fluorinated polymer is ≤ 4%; and optionally, based on the total mass of the film layer, a mass content of the second fluorinated polymer is ≤ 4%. When the mass content of the multiple fluorinated polymers is within the above range, the multiple fluorinated polymers can effectively improve the interfacial performance and structural stability of the electrode plate. The mass content of the multiple fluorinated polymers refers to the total mass content of all fluorinated polymers among the multiple fluorinated polymers.

According to a second aspect, the present application provides a battery including the electrode plate according to any embodiment of the first aspect of the present application.

In some embodiments, the electrode plate includes a positive electrode plate, the positive electrode plate including a positive electrode current collector and a positive electrode film layer disposed on at least one side of the positive electrode current collector, and the positive electrode film layer including a positive electrode active material, a first fluorinated polymer, and a second fluorinated polymer.

In some embodiments, based on a total mass of the positive electrode film layer, a total mass content of the first fluorinated polymer and the second fluorinated polymer is 0.05% to 2.5%.

In some embodiments, based on the total mass of the positive electrode film layer, a mass content of the first fluorinated polymer is less than a mass content of the second fluorinated polymer.

In some embodiments, based on the total mass of the positive electrode film layer, the total mass content of the first fluorinated polymer is ≤ 2%; optionally, 0.05% to 2%; and optionally, 0.05% to 1%.

In some embodiments, based on the total mass of the positive electrode film layer, the total mass content of the second fluorinated polymer is ≤ 2%; optionally, 1% to 2%; and optionally, 1.2% to 2%.

In some embodiments, the electrode plate includes a negative electrode plate, the negative electrode plate including a negative electrode current collector and a negative electrode film layer disposed on at least one side of the negative electrode current collector, and the negative electrode film layer including a negative electrode active material, a first fluorinated polymer, and a second fluorinated polymer.

In some embodiments, based on a total mass of the negative electrode film layer, a total mass content of the first fluorinated polymer and the second fluorinated polymer is 0.05% to 5%.

In some embodiments, based on the total mass of the negative electrode film layer, a mass content of the first fluorinated polymer is greater than a mass content of the second fluorinated polymer.

In some embodiments, based on the total mass of the negative electrode film layer, the mass content of the first fluorinated polymer is less than the mass content of the second fluorinated polymer.

In some embodiments, based on the total mass of the negative electrode film layer, the mass content of the first fluorinated polymer is ≤ 4%; optionally, 0.5% to 4%.

In some embodiments, based on the total mass of the negative electrode film layer, the mass content of the second fluorinated polymer is ≤ 4%; optionally, 0.4% to 2%.

According to a third aspect, the present application provides an electric apparatus including the battery according to the second aspect of the present application.

## BRIEF DESCRIPTION OF DRAWINGS

To more clearly illustrate the technical solutions of the embodiments of the present application, the drawings required for use in the embodiments of the present application are briefly described below. It is apparent that the drawings described below are merely some embodiments of the present application, and those of ordinary skill in the art can obtain other drawings based on these drawings without creative effort.

FIG. 1 is a schematic diagram of an embodiment of a battery cell of the present application.
FIG. 2 is an exploded schematic view of the embodiment of the battery cell shown in FIG. 1.
FIG. 3 is a schematic diagram of an embodiment of a battery module of the present application.
FIG. 4 is a schematic diagram of an embodiment of a battery pack of the present application.
FIG. 5 is an exploded schematic view of the embodiment of the battery pack shown in FIG. 4.
FIG. 6 is a schematic diagram of an embodiment of an electric apparatus including a battery cell of the present application as a power source.

The drawings are not necessarily drawn to actual scale.

Description of reference signs:

1. battery pack; 2. upper case; 3. lower case; 4. battery module;
5. battery cell; 51. housing; 52. electrode assembly;
53. cover plate; and
6. electric apparatus.

## DESCRIPTION OF EMBODIMENTS

Hereinafter, embodiments specifically disclosing the electrode plate, battery, and electric apparatus of the present application are described in detail with appropriate reference to the drawings. However, unnecessary detailed descriptions may be omitted in some cases. For example, detailed descriptions of well-known matters or repetitive descriptions of substantially identical structures may be omitted. This is to avoid unnecessarily verbose descriptions and to facilitate understanding by those skilled in the art. Additionally, the drawings and the following descriptions are provided for those skilled in the art to fully understand the present application and are not intended to limit the subject matter recited in the claims.

The "ranges" disclosed in the present application are defined in the form of lower and upper limits, where a given range is defined by selecting a lower limit and an upper limit, and the selected lower and upper limits define the boundaries of a specific range. Ranges defined in this manner may include or exclude the endpoints and can be arbitrarily combined, meaning any lower limit can be combined with any upper limit to form a range. For example, if ranges of 60 to 120 and 80 to 110 are listed for a specific parameter, it is understood that ranges of 60 to 110 and 80 to 120 are also contemplated. Additionally, if minimum range values of 1 and 2 are listed, and maximum range values of 3, 4, and 5 are listed, the following ranges are all contemplated: 1 to 3, 1 to 4, 1 to 5, 2 to 3, 2 to 4, and 2 to 5. In the present application, unless otherwise specified, the numerical range "a to b" represents an abbreviated representation of any real number combination between a and b, where a and b are both real numbers. For example, the numerical range "0 to 5" means that all real numbers between "0 to 5" have been listed herein, and "0 to 5" is merely an abbreviated representation of these numerical combinations. Additionally, when a parameter is expressed as an integer ≥ 2, it is equivalent to disclosing that the parameter is, for example, the integer 2, 3, 4, 5, 6, 7, 8, 9, 10, 11, 12, and so on.

Unless otherwise specified, all embodiments and optional embodiments of the present application can be

combined with each other to form new technical solutions.

Unless otherwise specified, all technical features and optional technical features of the present application can be combined with each other to form new technical solutions.

Unless otherwise specified, all steps of the present application can be performed sequentially or randomly, preferably sequentially. For example, the method includes steps (a) and (b), indicating that the method may include steps (a) and (b) performed sequentially, or steps (b) and (a) performed sequentially. For example, mentioning that the method may further include step (c) indicates that step (c) can be added to the method in any order, for example, the method may include steps (a), (b), and (c), or steps (a), (c), and (b), or steps (c), (a), and (b), and so on.

In the embodiments of the present application, the terms "multiple" and "plurality" refer to two or more.

The term "alkyl" encompasses straight-chain and branched alkyls. For example, an alkyl may be a C1 to C5 alkyl, a C1 to C4 alkyl, a C1 to C3 alkyl, or a C1 to C2 alkyl. In some embodiments, alkyl includes methyl, ethyl, propyl, isopropyl, butyl, isobutyl, and the like. Additionally, an alkyl may be optionally substituted. When substituted, the substituent includes a fluorine atom.

The term "alkoxy" refers to a group in which an alkyl is connected to an oxygen atom via a single bond. For example, an alkoxy may be a C1 to C5 alkoxy, a C1 to C3 alkoxy, or a C1 to C2 alkoxy. In some embodiments, alkoxy includes methoxy, ethoxy, propoxy, and the like. Additionally, an alkoxy may be optionally substituted.

The term "halogen atom" refers to a fluorine atom, a chlorine atom, a bromine atom, and the like.

The term "hydrogen" refers to 1H (protium, H), 2H (deuterium, D), or 3H (tritium, T). In various embodiments, "hydrogen" may be 1H (protium, H).

A battery includes an electrode assembly and an electrolyte, the electrode assembly including an electrode plate and a separator, the electrode plate including a positive electrode plate and a negative electrode plate, the positive electrode plate including a positive electrode film layer containing a positive electrode active material, the positive electrode active material capable of providing active ions, the negative electrode plate including a negative electrode film layer containing a negative electrode active material, the separator disposed between the positive electrode plate and the negative electrode plate, primarily serving to prevent short-circuiting between the positive electrode plate and the negative electrode plate while allowing active ions to pass freely to form a circuit.

There is a solid-liquid contact interface between the electrode plate and the electrolyte. During the battery's charge-discharge cycles, the electrode plate may undergo volume swelling, causing the interface to be damaged and thus formation of a new interface. The formation of the new interface leads to continuous interfacial side reactions, deteriorating the cycling performance and storage performance of battery cells.

In view of the above issues, the embodiments of the present application aim to improve the cycling performance and storage performance of battery cells by enhancing the interfacial performance of the solid-liquid contact interface. The embodiments of the present application provide an electrode plate, the electrode plate including multiple fluorinated polymers, where at least two fluorinated polymers of the multiple fluorinated polymers have different materials, one fluorinated polymer being capable of forming an in-situ gel on the surface of solid-phase active material, forming a stable solid-liquid interface on the surface of the active material, reducing the risk of side reactions at the solid-liquid interface. However, this fluorinated polymer is not conducive to binding between active materials, resulting in poor structural stability of the electrode plate, while another fluorinated polymer among the multiple fluorinated polymers can enhance the binding strength between active materials, supporting the plate, thereby improving the structural stability of the electrode plate, and thus improving the cycling performance and storage performance of battery cells.

The technical solutions of the present application are described in detail below.

## Electrode plate

According to a first aspect, an embodiment of the present application provides an electrode plate.

The electrode plate includes a current collector and a film layer disposed on at least one side of the current collector, the film layer including an active material and multiple fluorinated polymers, where among the multiple fluorinated polymers, one fluorinated polymer has a crystallinity denoted as $X_{c1}$%, and a cold crystallization temperature denoted as $T_{c1}$°C, and among the multiple fluorinated polymers, another fluorinated polymer has a crystallinity denoted as $X_{c2}$%, and a cold crystallization temperature denoted as $T_{c2}$°C, where the multiple fluorinated polymers satisfy: $20\% \leq (X_{c2} - X_{c1})/X_{c1} < 400\%$, and $30\% \leq (T_{c2} - T_{c1})/T_{c1} < 250\%$.

The electrode plate may include at least one of a positive electrode plate and a negative electrode plate. For example, the electrode plate includes a positive electrode plate, the positive electrode plate including a positive electrode current collector and a positive electrode film layer disposed on at least one side of the positive electrode current collector, the positive electrode film layer including a positive electrode active material and multiple fluorinated polymers. For another example, the electrode plate includes a negative electrode plate, the negative electrode plate including a negative electrode current collector and a negative electrode film layer disposed on at least one side of the negative electrode current collector, the negative electrode film layer including a negative electrode active material and multiple fluorinated

polymers. For another example, the electrode plate includes a positive electrode plate and a negative electrode plate, the positive electrode plate including a positive electrode current collector and a positive electrode film layer disposed on at least one side of the positive electrode current collector, the positive electrode film layer including a positive electrode active material and multiple fluorinated polymers, and the negative electrode plate including a negative electrode current collector and a negative electrode film layer disposed on at least one side of the negative electrode current collector, the negative electrode film layer including a negative electrode active material and multiple fluorinated polymers.

In the present application, each fluorinated polymer among the multiple fluorinated polymers is a polymer containing fluorine atoms. One fluorinated polymer among the multiple fluorinated polymers is defined as the first fluorinated polymer, and another fluorinated polymer among the multiple fluorinated polymers is defined as the second fluorinated polymer. When the multiple fluorinated polymers further include a third type of fluorinated polymer, the third type of fluorinated polymer is defined as a third fluorinated polymer, and so on. The more types of the multiple fluorinated polymers, the further the cycling performance and storage performance of battery cells can be improved through the synergistic use of the multiple fluorinated polymers.

The first fluorinated polymer has good affinity with the electrolyte in the battery cell, and when the first fluorinated polymer comes into contact with the electrolyte, swelling takes place, allowing the solvent in the electrolyte to quickly diffuse between the molecular chains of the first fluorinated polymer and be encapsulated by the molecular chains, forming an in-situ gel on the surface of the active material, which adheres to the surface of the active material to protect the active material. This closely connects the active material and the electrolyte, improves the solid-liquid interface performance, and can reduce side reactions between the active material and the electrolyte. However, due to its poor solvent resistance, the first fluorinated polymer is not conducive to tightly binding active materials together, especially under conditions of swelling and contraction of the active materials in the later stage of cycling, resulting in poor binding strength between the active materials and reduced structural stability of the electrode plate. The embodiments of the present application further include the second fluorinated polymer. The second fluorinated polymer has better solvent resistance. The second fluorinated polymer has a higher cohesive energy density, and can reduce its own swelling deformation, enhancing the binding strength between the active materials, thereby improving the structural stability of the electrode plate and enhancing the cycling performance and storage performance of battery cells.

The crystallinity $X_{c1}$% of the first fluorinated polymer is relatively low, and the cold crystallization temperature $T_{c1}$°C is relatively low, resulting in greater flexibility of the molecular chain, which is more conducive to the first fluorinated polymer forming an in-situ gel on the surface of active material particles, thereby improving the solid-liquid interface performance. The first fluorinated polymer and the second fluorinated polymer have similar structures. AS compared with the first fluorinated polymer, the second fluorinated polymer has a relatively higher crystallinity $X_{c2}$% and a relatively higher cold crystallization temperature $T_{c2}$°C, requiring more energy to overcome intermolecular constraints, which is more conducive to enhancing its own cohesive energy density, thereby reducing swelling deformation, and improving the binding strength between active material. Thus, through the cooperation of the multiple fluorinated polymers, the embodiments of the present application can effectively improve the cycling performance and storage performance of battery cells.

Crystallization refers to the process in which atoms, ions, or molecules in a material are arranged in a certain spatial order to form an ordered structure. The conformation of a polymer during crystallization is determined by both intramolecular and intermolecular factors, with intermolecular forces affecting the packing density between molecular chains. The crystallinity $X_C$% is used to characterize the degree of crystallization in a material, and the cold crystallization temperature $T_c$°C is the crystallization temperature of the material during the cooling process after melting. These two parameters can be measured using differential scanning calorimetry DSC. Specifically, the test procedure is as follows: take a sample of 0.5 g to 0.8 g, place the sample in a crucible, and subject it to heating and cooling in a nitrogen atmosphere at a heating rate of 10°C/min from an initial temperature 20°C below the material's intrinsic $T_g$°C to a temperature 20°C above the material's intrinsic $T_m$°C, hold for 5 min, and record the first heating curve. Then cool at a rate of 10°C/min to a final temperature 20°C below the material's intrinsic $T_g$°C, and record the cooling curve. The exothermic or endothermic peaks or transition points during the cooling process represent the material's actual cold crystallization temperature $T_c$°C. The crystallization enthalpy can be obtained by calculating the peak area corresponding to each peak on the cooling curve, and the ratio of the crystallization enthalpy to the standard enthalpy is the crystallinity $X_C$%. The crystallinity in the embodiments of the present application refers to the crystallinity measured by differential scanning calorimetry.

Through further selection of the crystallinity and cold crystallization temperature of the fluorinated polymers, the embodiments of the present application can further enhance the cycling performance and storage performance when the electrode plate is applied to battery cells.

In the embodiments of the present application, $20\% \leq (X_{c2} - X_{c1})/X_{c1} < 400\%$; optionally, $40\% \leq (X_{c2} - X_{c1})/X_{c1} < 400\%$. For example, $(X_{c2} - X_{c1})/X_{c1}$ may be 20%, 25%, 30%, 35%, 40%, 45%, 50%, 55%, 60%, 65%, 70%, 75%, 80%, 85%, 90%, 95%, 100%, 105%, 110%, 115%, 120%, 125%, 130%, 135%, 140%, 145%, 150%, 155%, 160%, 165%, 170%, 175%, 180%, 185%, 190%, 195%, 200%, 205%, 210%, 220%, 225%, 230%, 235%, 240%, 245%, 250%, 255%, 260%, 265%, 270%, 275%, 280%, 285%, 290%, 295%, 300%, 305%, 310%, 315%, 320%, 325%, 330%, 335%, 340%, 345%,

350%, 355%, 360%, 365%, 370%, 375%, 380%, 385%, 390%, 395%, or a range composed of any two of the above values.

In some embodiments, $X_{c2} - X_{c1} \geq 10$; optionally, $10 \leq X_{c2} - X_{c1} \leq 45$. For example, $X_{c2} - X_{c1}$ may be 10, 15, 20, 25, 30, 35, 40, 45, 50, 55, 60, or a range composed of any two of the above values. In other words, the difference between the crystallinity of the second fluorinated polymer and the crystallinity of the first fluorinated polymer may be 10%, 15%, 20%, 25%, 30%, 35%, 40%, 45%, 50%, 55%, 60%, or a range composed of any two of the above values.

In some embodiments, $0 < X_{c1} \leq 28$. The crystallinity of the first fluorinated polymer, as measured by differential scanning calorimetry, may be 5%, 10%, 15%, 20%, 25%, 28%, or a range composed of any two of the above values. When $X_{c1}\% < 10\%$, the fluorinated polymer may have essentially no melting peak, and the melting temperature may not be detectable.

In some embodiments, $30 \leq X_{c2} \leq 50$. The crystallinity of the second fluorinated polymer, as measured by differential scanning calorimetry, may be 30%, 35%, 40%, 42%, 45%, 48%, 50%, 52%, 55%, 58%, 60%, or a range composed of any two of the above values. When $X_{c2}\% < 10\%$, the fluorinated polymer may have essentially no melting peak, and the melting temperature may not be detectable.

In the embodiments of the present application, $30\% \leq (T_{c2} - T_{c1})/T_{c1} < 250\%$; optionally, $35\% \leq (T_{c2} - T_{c1})/T_{c1} < 250\%$. For example, $(T_{c2} - T_{c1})/T_{c1}$ may be 30%, 35%, 40%, 45%, 50%, 55%, 60%, 65%, 70%, 75%, 80%, 85%, 90%, 95%, 100%, 105%, 110%, 115%, 120%, 125%, 130%, 135%, 140%, 145%, 150%, 155%, 160%, 165%, 170%, 175%, 180%, 185%, 190%, 195%, 200%, 205%, 210%, 220%, 225%, 230%, 235%, 240%, 245%, 250%, or a range composed of any two of the above values.

In some embodiments, $T_{c2} - T_{c1} \geq 25$; and further optionally, $25 \leq T_{c2} - T_{c1} \leq 100$. For example, $T_{c2} - T_{c1}$ may be 25, 30, 35, 40, 45, 50, 55, 60, 65, 70, 75, 80, 85, 90, 95, 100, or a range composed of any two of the above values. In other words, the difference between the cold crystallization temperature of the second fluorinated polymer and the cold crystallization temperature of the first fluorinated polymer may be 25°C, 30°C, 35°C, 40°C, 45°C, 50°C, 55°C, 60°C, 65°C, 70°C, 75°C, 80°C, 85°C, 90°C, 95°C, 100°C, or a range composed of any two of the above values.

In some embodiments, $35 < T_{c1} \leq 100$. The cold crystallization temperature of the first fluorinated polymer may be 35°C, 40°C, 45°C, 50°C, 55°C, 60°C, 65°C, 70°C, 75°C, 80°C, 81°C, 85°C, 90°C, 95°C, 100°C, or a range composed of any two of the above values.

In some embodiments, $115 \leq T_{c2} \leq 140$. The cold crystallization temperature of the second fluorinated polymer may be 115°C, 118°C, 120°C, 122°C, 125°C, 128°C, 130°C, 132°C, 135°C, 138°C, 140°C, or a range composed of any two of the above values.

In some embodiments, the glass transition temperature of the first fluorinated polymer is $T_{g1}$°C, where $-30 \leq T_{g1} \leq 40$. For example, the glass transition temperature of the first fluorinated polymer may be -30°C, - 25°C, -20°C, -15°C, -10°C, -5°C, 0°C, 5°C, 10°C, 15°C, 20°C, 25°C, 30°C, 35°C, 40°C, or a range composed of any two of the above values.

In some embodiments, the glass transition temperature of the second fluorinated polymer is $T_{g1}$°C, where $-30 \leq T_{g1} \leq 40$. For example, the glass transition temperature of the second fluorinated polymer may be - 30°C, -25°C, -20°C, -15°C, -10°C, -5°C, 0°C, 5°C, 10°C, 15°C, 20°C, 25°C, 30°C, 35°C, 40°C, or a range composed of any two of the above values.

In some embodiments, each fluorinated polymer among the multiple fluorinated polymers independently includes at least one of a compound represented by formula (AI) to a compound represented by formula (AIII).

When the multiple fluorinated polymers include a first fluorinated polymer and a second fluorinated polymer, the first fluorinated polymer and the second fluorinated polymer each independently include at least one of a compound represented by formula (AI) to a compound represented by formula (AIII), and the materials of the first fluorinated polymer and the second fluorinated polymer are different, specifically distinguished by differences in structural units and/or degree of polymerization.

When the multiple fluorinated polymers include a first fluorinated polymer, a second fluorinated polymer, and a third fluorinated polymer. The first fluorinated polymer, and the second fluorinated polymer each independently include at least one of a compound represented by formula (AI) to a compound represented by formula (AIII). The materials of the first fluorinated polymer, the second fluorinated polymer, and the third fluorinated polymer are pairwise different, specifically distinguished by differences in structural units and/or degree of polymerization.

The compound represented by formula (AI) is as follows:

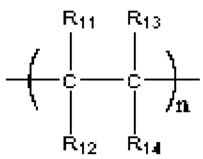
formula (AI),

where in formula (AI), $R_{11}$, $R_{12}$, $R_{13}$, and $R_{14}$ each independently include a hydrogen atom, a fluorine atom, a chlorine

atom, a substituted or unsubstituted alkyl, or a substituted or unsubstituted alkoxy, and at least one of $R_{11}$, $R_{12}$, $R_{13}$, and $R_{14}$ includes a fluorine atom.

Optionally, $R_{11}$, $R_{12}$, $R_{13}$, and $R_{14}$ each independently include a hydrogen atom, a fluorine atom, a chlorine atom, a substituted or unsubstituted C1-C10 alkyl, or a substituted or unsubstituted C1-C10 alkoxy.

Optionally, $R_{11}$, $R_{12}$, $R_{13}$, and $R_{14}$ each independently include a hydrogen atom, a fluorine atom, a chlorine atom, a substituted or unsubstituted C1-C3 alkyl, or a substituted or unsubstituted C1-C3 alkoxy.

Further optionally, $R_{11}$, $R_{12}$, $R_{13}$, and $R_{14}$ each independently include a hydrogen atom, a fluorine atom, a chlorine atom, methyl, fluoromethyl, methoxy, or perfluoromethoxy.

In some embodiments, the degree of polymerization n of the fluorinated polymer is selected from positive integers from 1000 to 30000, for example, 1000, 2000, 3000, 4000, 5000, 6000, 7000, 8000, 9000, 10000, 11000, 12000, 13000, 14000, 15000, 16000, 17000, 18000, 19000, 20000, 21000, 22000, 23000, 24000, 25000, 26000, 27000, 28000, 29000, or a range composed of any two of the above values.

Optionally, when substituted, the substituent may include one or more of a cyano group (-CN), a nitro group, a sulfonic acid group, a sulfonyl group, an amide, a carboxyl group, an ester group, or a halogen atom. The halogen atom may include a fluorine atom, a bromine atom, or the like, optionally a fluorine atom.

In some embodiments, the fluorinated polymer includes at least one of a compound represented by formula (AI-1) to a compound represented by formula (AI-11),

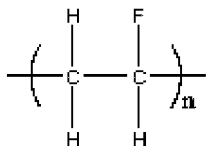 formula (AI-1), 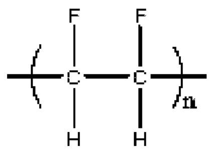 formula (AI-2),

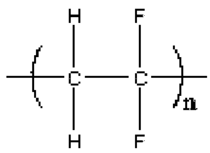 formula (AI-3),

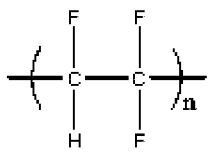 formula (AI-4), 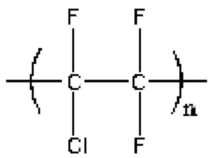 formula (AI-5),

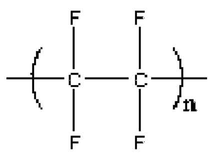 formula (AI-6),

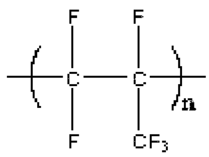 formula (AI-7), 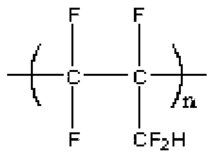 formula (AI-8),

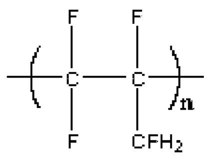 formula (AI-9), 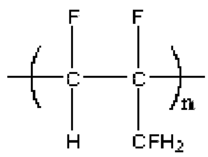 formula (AI-10),

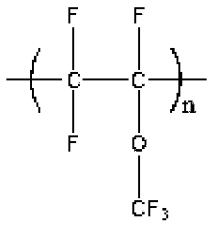

formula (AI-11).

The compound represented by formula (AII) is as follows:

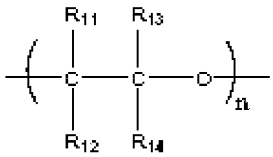

formula (AII),

where in formula (AII), $R_{11}$, $R_{12}$, $R_{13}$, and $R_{14}$ each independently include a hydrogen atom, a fluorine atom, a chlorine atom, a substituted or unsubstituted alkyl, or a substituted or unsubstituted alkoxy, and at least one of $R_{11}$, $R_{12}$, $R_{13}$, and $R_{14}$ includes a fluorine atom.

Optionally, $R_{11}$, $R_{12}$, $R_{13}$, and $R_{14}$ each independently include a hydrogen atom, a fluorine atom, a chlorine atom, a substituted or unsubstituted C1-C10 alkyl, or a substituted or unsubstituted C1-C10 alkoxy.

Optionally, $R_{11}$, $R_{12}$, $R_{13}$, and $R_{14}$ each independently include a hydrogen atom, a fluorine atom, a chlorine atom, a substituted or unsubstituted C1-C3 alkyl, or a substituted or unsubstituted C1-C3 alkoxy.

Further optionally, $R_{11}$, $R_{12}$, $R_{13}$, and $R_{14}$ each independently include a hydrogen atom, a fluorine atom, a chlorine atom, methyl, fluoromethyl, methoxy, or perfluoromethoxy.

In some embodiments, the degree of polymerization n of the fluorinated polymer is selected from positive integers from 1000 to 30000, for example, 1000, 2000, 3000, 4000, 5000, 6000, 7000, 8000, 9000, 10000, 11000, 12000, 13000, 14000, 15000, 16000, 17000, 18000, 19000, 20000, 21000, 22000, 23000, 24000, 25000, 26000, 27000, 28000, 29000, or a range composed of any two of the above values.

Optionally, when substituted, the substituent may include one or more of a cyano group (-CN), a nitro group, a sulfonic acid group, a sulfonyl group, an amide, a carboxyl group, an ester group, or a halogen atom. The halogen atom may include a fluorine atom, a bromine atom, or the like, optionally a fluorine atom.

In some embodiments, the fluorinated polymer includes at least one of a compound represented by formula (AII-1) to a compound represented by formula (AII-5),

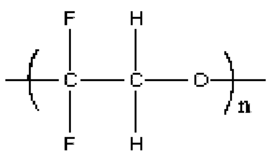

formula (AII-1),

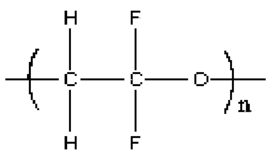

formula (AII-2),

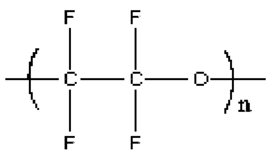

formula (AII-3),

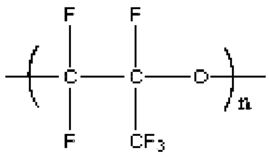

formula (AII-4),

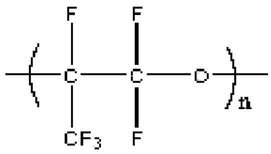

formula (AII-5).

The compound represented by formula (AIII) is as follows:

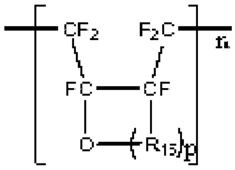

formula (AIII),

where in formula (AIII), $R_{15}$ includes a single bond or a substituted or unsubstituted alkyl; and when substituted, the substituent includes a fluorine atom.

In some embodiments, when substituted, the substituent may include one or more of a cyano group (-CN), a nitro group, a sulfonic acid group, a sulfonyl group, an amide, a carboxyl group, an ester group, or a halogen atom.

Optionally, $R_{15}$ includes a single bond or a substituted or unsubstituted C1-C3 alkyl.

In some embodiments, p is selected from positive integers from 1 to 3, for example, 1, 2, or 3.

In some embodiments, the degree of polymerization n of the fluorinated polymer is selected from positive integers from 1000 to 30000, for example, 1000, 2000, 3000, 4000, 5000, 6000, 7000, 8000, 9000, 10000, 11000, 12000, 13000, 14000, 15000, 16000, 17000, 18000, 19000, 20000, 21000, 22000, 23000, 24000, 25000, 26000, 27000, 28000, 29000, or a range composed of any two of the above values.

In some embodiments, the fluorinated polymer includes at least one of a compound represented by formula (AIII-1) to a compound represented by formula (AIII-3),

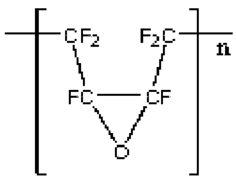

formula (AIII-1),

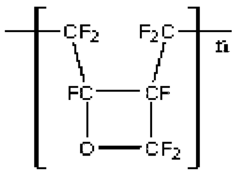

formula (AIII-2),

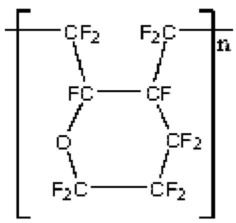

formula (AIII-3).

For example, the fluorinated polymer includes one or more of polytetrafluoroethylene PTFE, polyvinylidene fluoride PVDF, fluorinated ethylene propylene copolymer FEP, perfluoroalkoxy polymer PFA, perfluoropolyether PFPE, polyvinylidene fluoride-hexafluoropropylene copolymer PVDF-HFP, polyvinylidene fluoride-trifluoroethylene copolymer PVDF-TrFE, and perfluoro(1-butenyl vinyl ether) polymer (perfluoro(1-butenyl vinyl ether) polymer, CYTOP for short).

Optionally, the fluorinated polymer includes one or more of polytetrafluoroethylene PTFE, polyvinylidene fluoride PVDF, fluorinated ethylene propylene copolymer FEP, polyvinylidene fluoride-hexafluoropropylene copolymer PVDF-HFP, and polyvinylidene fluoride-trifluoroethylene copolymer PVDF-TrFE.

The above fluorinated polymers may be derived from one or more of the following monomers: fluorinated ethylene, vinyl fluoride, 1,2-difluoroethylene, vinylidene fluoride, trifluoroethylene, chlorotrifluoroethylene, tetrafluoroethylene, hexafluoropropylene, 3,3,3-trifluoropropylene, trifluoropropylene, tetrafluoropropylene, and pentafluoropropylene. Optionally, the above fluorinated polymers may be derived from at least two of the following monomers: fluorinated ethylene, vinyl fluoride, 1,2-difluoroethylene, vinylidene fluoride, trifluoroethylene, chlorotrifluoroethylene, tetrafluoroethylene, hexafluoropropylene, 3,3,3-trifluoropropylene, trifluoropropylene, tetrafluoropropylene, and pentafluoropropylene.

In the embodiments of the present application, the polymer may also be obtained by copolymerizing the above structural groups with a small amount of other types of structural groups (for example, olefin compounds, ester monomers, nitrile monomers such as acrylonitrile, amide monomers such as acrylamide, and acrylic acid). These small amounts of monomers have relatively poor lyophilic properties, and copolymerizing the monomers of the above fluorinated polymers with these monomers can improve the swelling rate and compressive modulus of the fluorinated polymers.

In some embodiments, the molecular weight of the fluorinated polymer is from $2\times10^5$ g/mol to $1.5\times10^6$ g/mol.

For example, the molecular weight of the fluorinated polymer may be $2\times10^5$ g/mol, $5\times10^5$ g/mol, $8\times10^5$ g/mol, $1\times10^6$ g/mol, $1.2\times10^6$ g/mol, or a range composed of any two of the above values.

In some embodiments, the molecular weight of the first fluorinated polymer is $W_1$ g/mol, and the molecular weight of the second fluorinated polymer is $W_2$ g/mol, where the multiple fluorinated polymers satisfy: $0 < W_1/W_2 < 1$. The first fluorinated polymer has a relatively lower molecular weight and stronger affinity with the solvent, but a higher risk of being dispersed by the solvent, which is not conducive to controlling its positional distribution. The second fluorinated polymer has a relatively higher molecular weight, longer molecular chain segments, an increased probability of contact and entanglement between molecular chain segments, and enhanced intermolecular forces, which can improve the binding strength between active materials and significantly reduce interactions with solvent molecules, thereby making it easier to control its dispersion position. The combination of the two is more conducive to balancing the improvement of interfacial side reactions and structural stability in the positive electrode plate, thereby enhancing the cycling performance and storage performance of battery cells. For example, $W_1/W_2$ may be 0.05, 0.10, 0.15, 0.20, 0.25, 0.30, 0.35, 0.40, 0.45, 0.50, 0.55, 0.60, 0.65, 0.70, 0.75, 0.80, 0.85, 0.90, 0.95, or a range composed of any two of the above values.

In some embodiments, $2.0\times10^5 \le W_1 \le 1.0\times10^6$. For example, the molecular weight of the first fluorinated polymer may be $2\times10^5$ g/mol, $5\times10^5$ g/mol, $8\times10^5$ g/mol, $1.0\times10^6$ g/mol, or a range composed of any two of the above values.

In some embodiments, $5.0\times10^5 \le W_2 \le 1.5\times10^6$. For example, the molecular weight of the second fluorinated polymer may be $5\times10^5$ g/mol, $6\times10^5$ g/mol, $8\times10^5$ g/mol, $1\times10^6$ g/mol, $1.5\times10^6$ g/mol, or a range composed of any two of the above values.

The relevant parameters of the fluorinated polymers in the embodiments of the present application can be tested using the following methods:

The groups of the fluorinated polymers in the embodiments of the present application can be tested using infrared spectroscopy IR. Specifically, the fluorinated polymer is tested using a Thermo Nicolet Nexus 670 Attenuated Total Reflectance Fourier Transform Infrared Spectrometer (FTIR-ATR), and the test is conducted in accordance with standard GB/T6040-2002, with a test range: ATR method 600-4000 $cm^{-1}$; repeatability: $\pm2$ $cm^{-1}$; resolution: better than 4 $cm^{-1}$; transmission depth 0.2-0.6 $\mu$m.

The structure of the fluorinated polymers in the embodiments of the present application can be tested using nuclear magnetic resonance NMR. Specifically, 1H NMR and 13C NMR are performed on a Varian Mercury Plus-400 nuclear magnetic resonance spectrometer, with a test temperature of 20°C, TMS as the internal standard, $CDCl_3$ as the solvent, and a proton resonance frequency of 400 MHz.

The types of polymer monomers in the fluorinated polymers (especially for monomers with a low proportion in the polymer) in the embodiments of the present application can be tested using pyrolysis-gas chromatography-mass spectrometry. The specific test procedure is as follows: accurately weigh 0.5 mg of the sample and place it in a sample cup, fix it to the injection rod, and load it into a pyrolyzer installed near the GC (gas chromatography) injection port. After the pyrolyzer reaches the set temperature, press the injection button, and the sample cup rapidly falls into the pyrolyzer furnace core via free fall. In an inert gas $N_2$ atmosphere, volatile components are instantly vaporized, carried by the carrier gas into the gas chromatography column for separation, and finally detected by a flame ionization detector FID or mass spectrometer MS, thereby obtaining a gas chromatogram or total ion current chromatogram.

The molecular weight of the fluorinated polymers in the embodiments of the present application has a meaning well-known in the art and can be measured using equipment and methods commonly used in the art. It can be tested using gel permeation chromatography GPC in accordance with GB/T21863-2008. The specific test procedure is as follows: take an appropriate amount of the sample to be tested (the sample concentration should ensure 8%-12% shading), add 20 ml of deionized water, and perform external ultrasound for 5 min (53 kHz/120 W) to ensure complete dispersion of the sample, then measure the sample in accordance with GB/T19077-2016/ISO 13320:2009 standards.

[Positive electrode plate]

In some embodiments, the electrode plate includes a positive electrode plate, the positive electrode plate including a positive electrode current collector and a positive electrode film layer disposed on at least one side of the positive electrode current collector, the positive electrode film layer including a positive electrode active material and multiple fluorinated polymers. In this case, the negative electrode plate may include a negative electrode current collector and a negative electrode film layer disposed on at least one side of the negative electrode current collector, the negative electrode film layer including a negative electrode active material and multiple fluorinated polymers. Alternatively, the negative electrode plate may include a negative electrode current collector and a negative electrode film layer disposed on at least one side of the negative electrode current collector, the negative electrode film layer including a negative electrode active material, that is, excluding fluorinated polymers.

In some other embodiments, the electrode assembly includes a negative electrode plate, the negative electrode plate including a negative electrode current collector and a negative electrode film layer disposed on at least one side of the negative electrode current collector, the negative electrode film layer including a negative electrode active material and multiple fluorinated polymers. In this case, the positive electrode film layer may include a positive electrode active material, that is, excluding fluorinated polymers.

Further studies have found that when both the positive electrode film layer and the negative electrode film layer include multiple fluorinated polymers, the multiple fluorinated polymers can enhance the interfacial performance and structural stability of the positive electrode plate, as well as the interfacial performance and structural stability of the negative electrode plate, thereby effectively improving the cycling performance and storage performance of battery cells.

In some embodiments, based on the total mass of the positive electrode film layer, the total mass content of the multiple fluorinated polymers is ≤ 5%; optionally, 0.05% to 3%; optionally, 0.05% to 2.5%. When the mass content of the multiple fluorinated polymers is within the above range, the multiple fluorinated polymers can effectively improve the interfacial performance and structural stability of the positive electrode plate. The mass content of the multiple fluorinated polymers refers to the total mass content of each fluorinated polymer among the multiple fluorinated polymers.

For example, the total mass content of the multiple fluorinated polymers may be 0.05%, 0.08%, 0.10%, 0.11%, 0.12%, 0.15%, 0.16%, 0.18%, 0.20%, 0.22%, 0.25%, 0.28%, 0.30%, 0.32%, 0.35%, 0.38%, 0.40%, 0.42%, 0.45%, 0.48%, 0.50%, 0.55%, 0.58%, 0.60%, 0.70%, 0.80%, 0.90%, 0.95%, 1%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, 4.1%, 4.2%, 4.3%, 4.4%, 4.5%, 4.6%, 4.7%, 4.8%, 4.9%, 5.0%, or a range composed of any two of the above values.

In some embodiments, based on the total mass of the positive electrode film layer, the mass content of the first fluorinated polymer is less than the mass content of the second fluorinated polymer; when the multiple fluorinated polymers satisfy the above conditions, the interfacial performance and structural stability of the positive electrode plate can be further improved.

In some embodiments, based on the total mass of the positive electrode film layer, the mass content of the first fluorinated polymer is ≤ 2%; optionally, 0.05% to 2%; and optionally, 0.05% to 1%, for example, 0.05%, 0.08%, 0.10%, 0.11%, 0.12%, 0.15%, 0.16%, 0.18%, 0.20%, 0.22%, 0.25%, 0.28%, 0.30%, 0.32%, 0.35%, 0.38%, 0.40%, 0.42%, 0.45%, 0.48%, 0.50%, 0.55%, 0.58%, 0.60%, 0.70%, 0.80%, 0.90%, 0.95%, 1%, 1.1%, 1.2%, 1.3%, 1.4%, 1.5%, 1.6%, 1.7%, 1.8%, 1.9%, 2.0%, or a range composed of any two of the above values.

In some embodiments, based on the total mass of the positive electrode film layer, the mass content of the second fluorinated polymer is ≤ 2%; optionally, 1% to 2%; and optionally, 1.2% to 2%, for example, 0.05%, 0.08%, 0.10%, 0.11%, 0.12%, 0.15%, 0.16%, 0.18%, 0.20%, 0.22%, 0.25%, 0.28%, 0.30%, 0.32%, 0.35%, 0.38%, 0.40%, 0.42%, 0.45%, 0.48%, 0.50%, 0.55%, 0.58%, 0.60%, 0.70%, 0.80%, 0.90%, 0.95%, 1%, 1.1%, 1.2%, 1.3%, 1.4%, 1.5%, 1.6%, 1.7%, 1.8%, 1.9%, 2.0%, or a range composed of any two of the above values.

In the embodiments of the present application, the mass content of the polymer has a meaning well-known in the art and can be tested using equipment and methods well-known in the art, for example, it can be tested using thermogravimetric analysis TGA in accordance with JY/T014-1996. Specifically, based on the mass loss of the plate during the heating process, a mass-temperature curve, that is, a TG curve, is drawn, and the mass loss corresponding to the polymer decomposition temperature is read as the total mass of the polymer in the plate, thereby calculating the mass content and coating weight of the polymer. During the test, the following heating program can be used in a nitrogen

atmosphere: 5°C/min, RT to 500°C; 10°C/min, 500 to 600°C; hold at 600°C for 10 min, then end.

The positive electrode film layer includes a positive electrode active material, and the positive electrode active material may be a positive electrode active material well-known in the art for use in battery cells. For example, the positive electrode active material includes a lithium-containing positive electrode active material, which may include at least one of the following materials: lithium-containing phosphate compounds and layered structure positive electrode active materials.

For example, the general formula of an olivine-type phosphate active material (lithium-containing phosphate compound) is: $Li_xA_yMe_aM_bP_{1-c}X_cY_z$, where $0 \le x \le 1.3$, $0 \le y \le 1.3$, and $0.9 \le x + y \le 1.3$; $0.9 \le a \le 1.5$, $0 \le b \le 0.5$, and $0.9 \le a + b \le 1.5$; $0 \le c \le 0.5$; $3 \le z \le 5$; A includes one or more of Na, K, Mg; Me includes one or more of Mn, Fe, Co, Ni; M includes one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, Ce; X includes one or more of S, Si, Cl, B, C, N; Y includes one or more of O, F. Specifically, the olivine-type phosphate active material includes one or more of $LiFePO_4$, $LiMnPO_4$, $LiNiPO_4$, and $LiCoPO_4$.

For example, layered structure positive electrode active materials (layered structure positive electrode active materials such as ternary, lithium/sodium nickelate, lithium/sodium cobaltate, lithium/sodium manganate, lithium-rich layered, and rock-salt phase layered materials). The general formula of layered structure positive electrode active materials is: $Li_xA_yNi_aCo_bMn_cM_{(1-a-b-c)}Y_z$, where $0 \le x \le 2.1$, $0 \le y \le 2.1$, and $0.9 \le x + y \le 2.1$; $0 \le a \le 1$, $0 \le b \le 1$, $0 \le c \le 1$, and $0.1 \le a + b + c \le 1$; $1.8 \le z \le 3.5$; A includes one or more of Na, K, Mg; M includes one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, Ce; Y includes one or more of O, F. Optionally, y = 0. Specifically, the layered structure positive electrode active material may include one or more of lithium cobalt oxide LCO, lithium nickelate LNO, lithium manganate LMO, $LiNi_{1/3}Co_{1/3}Mn_{1/3}O_2$ (NML33), $LiNi_{0.3}Co_{0.2}Mn_{0.3}O_2$ (NCM523), $LiNi_{0.6}Co_{0.2}Mn_{0.2}O_2$ (NCM622), $LiNi_{0.8}Co_{0.1}Mn_{0.1}O_2$ (NCM811), and NCA.

During the charge-discharge process of a battery cell, active ions such as Li undergo intercalation and deintercalation, and the molar content of Li varies when the battery cell is discharged to different states. In the embodiments of the present application, regarding the listing of positive electrode active materials, the molar content of Li refers to the initial state of the material, that is, before feeding, and the molar content of Li may change after charge-discharge cycles when the positive electrode active material is applied to a battery system.

In the embodiments of the present application, regarding the listing of positive electrode active materials, the molar content of oxygen O is only a theoretical value, and lattice oxygen release may cause changes in the molar content of oxygen O, resulting in actual fluctuations in the molar content of oxygen O.

In the embodiments of the present application, modified compounds may be modified by doping or coating. Doping modification may involve adding doping elements such as transition metals to the compound, and coating modification may involve surface coating with materials such as carbon, that is, forming a carbon coating layer on the outer surface of particles.

In some embodiments, based on the total mass of the positive electrode film layer, the mass content of the positive electrode active material is 80% to 99.9%, optionally 90% to 99%. When the mass content of the positive electrode active material is within the above range, it is beneficial to improving the energy density of the battery cell.

In some embodiments, the positive electrode current collector has two opposing surfaces in its thickness direction, and the positive electrode film layer may be disposed on either or both of the two opposing surfaces of the positive electrode current collector.

In some embodiments, the positive electrode current collector may be a metal foil or a composite current collector. As an example of a metal foil, aluminum foil or aluminum alloy foil may be used. The composite current collector may include a polymer material base layer and a metal material layer formed on at least one surface of the polymer material base layer. As an example, the metal material may include one or more of aluminum, aluminum alloy, nickel, nickel alloy, titanium, titanium alloy, silver, and silver alloy, and the polymer material base layer may include one or more of polypropylene (PP), polyethylene terephthalate (PET), polybutylene terephthalate (PBT), polystyrene (PS), and polyethylene (PE).

In some embodiments, the positive electrode film layer may optionally further include a positive electrode conductive agent. The embodiments of the present application do not impose particular restrictions on the type of positive electrode conductive agent. As an example, the positive electrode conductive agent includes one or more of superconducting carbon, conductive carbon black, conductive graphite, acetylene black, carbon black, Ketjen black, carbon dots, carbon nanotubes, graphene, and carbon nanofibers. In some embodiments, based on the total mass of the positive electrode film layer, the mass percentage content of the positive electrode conductive agent is below 5%.

The positive electrode film layer is typically formed by applying a positive electrode slurry on the positive electrode current collector, followed by drying and cold pressing. The positive electrode slurry is typically formed by dispersing the positive electrode active material, the multiple fluorinated polymers, an optional conductive agent, an optional binder, and any other components in a solvent and stirring them to uniformity. The solvent may be N-methylpyrrolidone (NMP), but is not limited thereto. Certainly, the preparation of the positive electrode plate is not limited to the above method and may also adopt the preparation methods described earlier.

[Negative electrode plate]

In some embodiments, the electrode plate includes a negative electrode plate, the negative electrode plate including a negative electrode current collector and a negative electrode film layer disposed on at least one side of the negative electrode current collector, the negative electrode film layer including a negative electrode active material and multiple fluorinated polymers.

The negative electrode active material may be a negative electrode active material well-known in the art for use in battery cells. As an example, the negative electrode active material may include, but is not limited to, at least one of natural graphite, artificial graphite, soft carbon, hard carbon, silicon-based materials, tin-based materials, and lithium titanate. The silicon-based material may include at least one of elemental silicon, silicon oxide, silicon-carbon composite, silicon-nitrogen composite, and silicon alloy material. The tin-based material may include at least one of elemental tin, tin oxide, and tin alloy material.

In some embodiments, based on the total mass of the negative electrode film layer, the mass content of the negative electrode active material is 80% to 99.9%, optionally 90% to 99%. When the mass content of the negative electrode active material is within the above range, it is beneficial to improving the energy density of the battery cell.

In some embodiments, based on the total mass of the negative electrode film layer, the mass content of the multiple fluorinated polymers is ≤ 5%; optionally, 0.05% to 5%. When the mass content of the multiple fluorinated polymers is within the above range, the multiple fluorinated polymers can effectively improve the interfacial performance and structural stability of the negative electrode plate. The mass content of the multiple fluorinated polymers refers to the total mass content of each fluorinated polymer among the multiple fluorinated polymers.

For example, the mass content of the multiple fluorinated polymers may be 0.05%, 0.08%, 0.10%, 0.11%, 0.12%, 0.15%, 0.16%, 0.18%, 0.20%, 0.22%, 0.25%, 0.28%, 0.30%, 0.32%, 0.35%, 0.38%, 0.40%, 0.42%, 0.45%, 0.48%, 0.50%, 0.55%, 0.58%, 0.60%, 0.70%, 0.80%, 0.90%, 0.95%, 1%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, 4.1%, 4.2%, 4.3%, 4.4%, 4.5%, 4.6%, 4.7%, 4.8%, 4.9%, 5.0%, or a range composed of any two of the above values.

In cases where the negative electrode slurry uses an aqueous solvent, in some embodiments, based on the total mass of the negative electrode film layer, the mass content of the first fluorinated polymer is greater than the mass content of the second fluorinated polymer; when the multiple fluorinated polymers satisfy the above conditions, the interfacial performance and structural stability of the negative electrode plate can be further improved.

In some embodiments, based on the total mass of the negative electrode film layer, the mass content of the first fluorinated polymer is ≤ 4%; optionally, 0.5% to 4%, optionally, 2% to 4%, for example, the mass content of the first fluorinated polymer may be 0.05%, 0.08%, 0.10%, 0.11%, 0.12%, 0.15%, 0.16%, 0.18%, 0.20%, 0.22%, 0.25%, 0.28%, 0.30%, 0.32%, 0.35%, 0.38%, 0.40%, 0.42%, 0.45%, 0.48%, 0.50%, 0.55%, 0.58%, 0.60%, 0.70%, 0.80%, 0.90%, 0.95%, 1%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, or a range composed of any two of the above values.

In some embodiments, based on the total mass of the negative electrode film layer, the mass content of the second fluorinated polymer is ≤ 4%; optionally, 0.4% to 4%, further optionally, 0.4% to 2%, further optionally, 0.4% to 1%, for example, the mass content of the first fluorinated polymer may be 0.05%, 0.08%, 0.10%, 0.11%, 0.12%, 0.15%, 0.16%, 0.18%, 0.20%, 0.22%, 0.25%, 0.28%, 0.30%, 0.32%, 0.35%, 0.38%, 0.40%, 0.42%, 0.45%, 0.48%, 0.50%, 0.55%, 0.58%, 0.60%, 0.70%, 0.80%, 0.90%, 0.95%, 1%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, or a range composed of any two of the above values.

In cases where the negative electrode slurry uses an oily solvent, in some embodiments, based on the total mass of the negative electrode film layer, the mass content of the first fluorinated polymer is greater than the mass content of the second fluorinated polymer; when the multiple fluorinated polymers satisfy the above conditions, the interfacial performance and structural stability of the negative electrode plate can be further improved.

In some embodiments, based on the total mass of the negative electrode film layer, the mass content of the first fluorinated polymer is ≤ 4%; optionally, 0.5% to 2%.

In some embodiments, based on the total mass of the negative electrode film layer, the mass content of the second fluorinated polymer is ≤ 4%; optionally, 0.4% to 4%, further optionally, 2% to 4%.

In some embodiments, the negative electrode current collector has two opposing surfaces in its thickness direction, and the negative electrode film layer is disposed on either or both of the two opposing surfaces of the negative electrode current collector.

In some embodiments, the negative electrode film layer may optionally further include a negative electrode conductive agent. The embodiments of the present application do not impose particular restrictions on the type of negative electrode conductive agent. As an example, the negative electrode conductive agent may include at least one of superconducting carbon, conductive graphite, acetylene black, carbon black, Ketjen black, carbon dots, carbon nanotubes, graphene, and carbon nanofibers. In some embodiments, based on the total mass of the negative electrode film layer, the mass percentage content of the negative electrode conductive agent is ≤ 5%.

In some embodiments, the negative electrode film layer may optionally further include other additives. As an example, other additives may include thickeners, such as sodium carboxymethyl cellulose (CMC), PTC thermistor materials, and the like. In some embodiments, based on the total mass of the negative electrode film layer, the mass percentage content of other additives is ≤ 2%.

In some embodiments, the negative electrode current collector may be a metal foil or a composite current collector. As an example of a metal foil, copper foil may be used. The composite current collector may include a polymer material base layer and a metal material layer formed on at least one surface of the polymer material base layer. As an example, the metal material may include at least one of copper, copper alloy, nickel, nickel alloy, titanium, titanium alloy, silver, and silver alloy. As an example, the polymer material base layer may include at least one of polypropylene (PP), polyethylene terephthalate (PET), polybutylene terephthalate (PBT), polystyrene (PS), and polyethylene (PE).

The negative electrode film layer is typically formed by applying a negative electrode slurry on the negative electrode current collector, followed by drying and cold pressing. The negative electrode slurry is typically formed by dispersing the negative electrode active material, the multiple fluorinated polymers, an optional conductive agent, an optional binder, and other optional additives in a solvent and stirring them to uniformity. The solvent may be N-methylpyrrolidone (NMP) or deionized water, but is not limited thereto. Certainly, the preparation of the negative electrode plate is not limited to the above method and may also adopt the preparation methods described earlier.

The negative electrode plate does not exclude additional functional layers besides the negative electrode film layer. For example, in some embodiments, the negative electrode plate of the present application further includes a conductive undercoat layer (for example, composed of a conductive agent and a binder) disposed between the negative electrode current collector and the negative electrode film layer on the surface of the negative electrode current collector. In other embodiments, the negative electrode plate of the present application further includes a protective layer covering the surface of the negative electrode film layer.

## Battery cell

According to a second aspect, an embodiment of the present application provides a battery cell.

The battery cell includes the electrode plate according to any embodiment of the first aspect of the present application, which can effectively improve the cycling performance and storage performance of the battery cell.

[Separator]

In some embodiments, the battery cell includes a separator.

In some embodiments, the separator includes a substrate.

In some embodiments, the separator includes a substrate and a coating disposed on at least one surface of the substrate.

The embodiments of the present application do not impose particular restrictions on the material of the substrate, and any well-known substrate with good chemical and mechanical stability may be used, such as at least one of glass fiber, non-woven fabric, polyethylene, polypropylene, and polyvinylidene fluoride. The substrate may be a single-layer film or a multilayer composite film. When the substrate is a multilayer composite film, the materials of each layer may be the same or different.

In some embodiments, the coating may further include a heat-resistant filler. Further, the heat-resistant filler may include at least one of inorganic particles and organic particles.

In some embodiments, the decomposition temperature of the heat-resistant filler may be 200°C or higher, whereby the heat-resistant filler may have good thermal stability and resistance to decomposition, further enhancing the heat resistance of the separator.

Inorganic particles have high thermal stability and resistance to decomposition. Optionally, inorganic particles include at least one of inorganic particles with a dielectric constant of 5 or higher, inorganic particles with ionic conductivity but not storing ions, and inorganic particles capable of undergoing electrochemical reactions.

Optionally, inorganic particles with a dielectric constant of 5 or higher include at least one of boehmite, aluminum oxide, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, barium titanate, $Pb(Zr,Ti)O_3$ (PZT for short), $Pb_{1-m}La_mZr_{1-n}Ti_nO_3$ (PLZT for short, $0 < m < 1$, and $0 < n < 1$), $Pb(Mg_3Nb_{2/3})O_3\text{-}PbTiO_3$ (PMN-PT for short), and their respective modified inorganic particles. Optionally, the modification method for each inorganic particle may be chemical modification and/or physical modification.

Chemical modification methods include coupling agent modification (for example, using silane coupling agents, and titanate coupling agents), surfactant modification, polymer grafting modification, and the like. Physical modification methods may include mechanical dispersion, ultrasonic dispersion, high-energy treatment, and the like. Modification treatment can reduce the aggregation of inorganic particles, thereby enabling the formation of a more stable and uniform spatial network structure with nanocellulose. Additionally, selecting coupling agents, surface active materials, or polymers with specific functional groups to modify inorganic particles can also help improve the wettability of the coating to the electrolyte and enhance the bonding strength between the coating and the substrate.

Optionally, inorganic particles with ionic conductivity but not storing ions include at least one of $Li_3PO_4$, lithium titanium phosphate $Li_{x1}Ti_{y1}(PO_4)_3$, lithium aluminum titanium phosphate $Li_{x2}Al_{y2}Ti_{z1}(PO_4)_3$, $(LiAlTiP)_{x3}O_{y3}$ type glass, lithium lanthanum titanate $Li_{x4}La_{y4}TiO_3$, lithium germanium thiophosphate $Li_{x5}Ge_{y5}P_{z2}S_w$, lithium nitride $Li_{x6}N_{y6}$, $SiS_2$ type glass $Li_{x7}Si_{y7}S_{z3}$, and $P_2S_5$ type glass $Li_{x8}P_{y8}S_{z4}$, where $0 < x1 < 2$, $0 < y1 < 3$, $0 < x2 < 2$, $0 < y2 < 1$, $0 < z1 < 3$, $0 < x3 < 4$, $0 < y3 < 13$, $0 < x4 < 2$, $0 < y4 < 3$, $0 < x5 < 4$, $0 < y5 < 1$, $0 < z2 < 1$, $0 < w < 5$, $0 < x6 < 4$, $0 < y6 < 2$, $0 < x7 < 3$, $0 < y7 < 2$, $0 < z3 < 4$, $0 < x8 < 3$, $0 < y8 < 3$, $0 < z4 < 7$. This can further enhance the ion transport properties of the separator.

Organic particles have good thermal stability and resistance to decomposition, thereby enhancing the heat resistance of the separator. Meanwhile, when the internal temperature of the battery cell reaches the melting point of the organic particles due to overcharging, thermal abuse, or the like, the organic particles can melt and be absorbed into the micropores of the substrate due to capillary action, acting to close pores and interrupt the circuit, thus contributing to ensuring high safety performance of the battery cell.

In some embodiments, organic particles include, but are not limited to, at least one of polyethylene particles, polypropylene particles, polystyrene particles, melamine resin particles, phenolic resin particles, polyester particles (for example, polyethylene terephthalate, polyethylene naphthalate, polybutylene terephthalate), polyimide particles, polyamide-imide particles, polyaramid particles, polyphenylene sulfide particles, polysulfone particles, polyethersulfone particles, polyetheretherketone particles, polyaryletherketone particles, and copolymers of butyl acrylate and ethyl methacrylate (for example, cross-linked polymers of butyl acrylate and ethyl methacrylate).

In some embodiments, the coating further includes a binder. The present application does not impose particular restrictions on the type of binder, and any well-known material with good adhesion may be used. As an example, the binder includes at least one of aqueous acrylic resin (for example, homopolymers of acrylic acid, methacrylic acid, sodium acrylate monomers, or copolymers with other comonomers), polyvinyl alcohol, isobutylene-maleic anhydride copolymer, and polyacrylamide.

Optionally, the content of the binder in the coating is < 30%, based on the mass of the coating.

[Electrolyte]

In some embodiments, the battery cell includes an electrolyte.

During the charge-discharge process of the battery cell, active ions intercalate and deintercalate back and forth between the positive electrode plate and the negative electrode plate, and the electrolyte serves to conduct active ions between the positive electrode plate and the negative electrode plate. The present application does not impose particular restrictions on the type of electrolyte, which may be selected based on actual needs.

The electrolyte includes an electrolyte salt and a solvent. The types of electrolyte salt and solvent are not specifically restricted and may be selected based on actual needs.

As an example, the electrolyte salt may include, but is not limited to, at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate ($LiPO_2F_2$), lithium difluoro(bisoxalato)phosphate (LiDFOP), and lithium tetrafluoro(oxalato)phosphate (LiTFOP).

As an example, the solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the electrolyte may optionally further include an additive. For example, the additive may include a negative electrode film-forming additive, a positive electrode film-forming additive, and an additive that can improve certain battery performance, such as an additive that improves battery overcharge performance, an additive that improves battery high-temperature performance, or an additive that improves battery low-temperature power performance.

In some embodiments, the positive electrode plate, separator, and negative electrode plate may be formed into an electrode assembly through a winding process and/or a lamination process.

In some embodiments, the battery cell may include an outer package. The outer package may be used to encapsulate the above electrode assembly and electrolyte.

In some embodiments, the outer package of the battery cell may be a hard shell, such as a hard plastic shell, aluminum shell, or steel shell. The outer package of the battery cell may also be a soft pouch, such as a pouch-type soft package. The material of the soft pouch may be plastic, such as at least one of polypropylene (PP), polybutylene terephthalate (PBT), and polybutylene succinate (PBS).

The present application does not impose particular restrictions on the shape of the battery cell, which may be cylindrical, square, or any other shape. FIG. 1 shows a battery cell 5 with a square structure as an example.

In some embodiments, as shown in FIG. 1 and FIG. 2, the outer package may include a housing 51 and a cover plate 53. The housing 51 may include a bottom plate and side plates connected to the bottom plate, with the bottom plate and side plates enclosing a receiving cavity. The housing 51 has an opening communicating with the receiving cavity, and the cover plate 53 is used to cover the opening to seal the receiving cavity. The positive electrode plate, negative electrode plate, and separator may be formed into an electrode assembly 52 through a winding process or a lamination process. The electrode assembly 52 is encapsulated in the receiving cavity. The electrolyte is infiltrated into the electrode assembly 52. The number of electrode assemblies 52 included in the battery cell 5 may be one or more, adjustable based on requirements.

The preparation method of the battery cell of the present application is well-known. In some embodiments, the positive electrode plate, separator, negative electrode plate, and electrolyte may be assembled to form a battery cell. As an example, the positive electrode plate, separator, and negative electrode plate may be formed into an electrode assembly through a winding process or a lamination process. The electrode assembly was placed in an outer package, dried, injected with electrolyte, and subjected to processes such as vacuum encapsulation, standing, formation, and shaping to obtain a battery cell.

In some embodiments of the present application, the battery cells according to the present application may be assembled into a battery module, and the number of battery cells included in the battery module may be one or more, with the specific number adjustable based on the application and capacity of the battery module.

FIG. 3 is a schematic diagram of a battery module 4 as an example. As shown in FIG. 3, in the battery module 4, multiple battery cells 5 may be sequentially arranged along the length direction of the battery module 4. Certainly, they may also be arranged in any other manner. Further, the multiple battery cells 5 may be fixed by fasteners.

Optionally, the battery module 4 may further include a casing with a receiving space, and the multiple battery cells 5 are accommodated in the receiving space.

In some embodiments, the above battery module may further be assembled into a battery pack, and the number of battery modules included in the battery pack may be adjusted based on the application and capacity of the battery pack.

The battery module 4 and battery pack may both serve as specific examples of the battery in the embodiments of the present application.

FIG. 4 and FIG. 5 are schematic diagrams of a battery pack 1 as an example. As shown in FIG. 4 and FIG. 5, the battery pack 1 may include a battery case and multiple battery modules 4 disposed in the battery case. The battery case includes an upper case 2 and a lower case 3, with the upper case 2 used to cover the lower case 3, forming a closed space for accommodating the battery modules 4. The multiple battery modules 4 may be arranged in the battery case in any manner.

## Electric apparatus

According to a third aspect, the present application provides an electric apparatus. The electric apparatus includes at least one of the battery cell, battery module, and battery pack of the present application. The battery cell, battery module, and battery pack may be used as a power source for the electric apparatus or as an energy storage unit for the electric apparatus. The electric apparatus may include, but is not limited to, mobile devices (for example, mobile phones, and laptops), electric vehicles (for example, pure electric vehicles, hybrid electric vehicles, plug-in hybrid electric vehicles, electric bicycles, electric scooters, electric golf carts, and electric trucks), electric trains, ships, satellites, energy storage systems, and the like. In some embodiments, the battery cell includes a liquid injection hole for injecting the electrolyte. When the battery cell is used in an electric apparatus, the liquid injection hole is located at the bottom of the battery cell in the vertical direction. Since the amount of free electrolyte in the battery cell is very small or even absent, placing the liquid injection hole at the bottom of the battery cell in the vertical direction can also improve the reliability of the battery cell, thereby enhancing the reliability of the electric apparatus.

The electric apparatus may select a battery cell, battery module, or battery pack based on its usage requirements. FIG. 6 is a schematic diagram of an electric apparatus as an example. The electric apparatus 6 is a pure electric vehicle, hybrid electric vehicle, plug-in hybrid electric vehicle, or the like. To meet the high power and high energy density requirements of the electric apparatus, a battery pack 1 or battery module may be used. As another example, the electric apparatus may be a mobile phone, tablet, laptop, or the like. Such electric apparatuses typically require thin and light

designs, and a battery cell may be used as the power source.

**Examples**

Hereinafter, examples of the present application are described. The examples described below are exemplary and intended only to explain the present application, and should not be construed as limiting the present application. Where specific techniques or conditions are not specified in the examples, they are carried out according to techniques or conditions described in the literature in the art or according to product specifications. Reagents or instruments used without indicating the manufacturer are all conventional products commercially available.

**Example 1: Preparation of lithium-ion battery**

(1) Preparation of positive electrode plate:
Multiple fluorinated polymers, a positive electrode active material lithium iron phosphate $LiFePO_4$, and a conductive agent carbon black were mixed in a mass ratio of 2.2:96.8:1 in N-methylpyrrolidone (NMP) to form a positive electrode slurry. The positive electrode slurry was applied on an aluminum foil current collector, dried at 85°C, cold-pressed, then cut, slit, and dried under vacuum at 85°C for 4 h to form a positive electrode plate.
(2) Preparation of negative electrode plate:
Multiple fluorinated polymers, a negative electrode active material artificial graphite, and a conductive agent carbon black were mixed well in a weight ratio of 2.4:97.3:0.3 in water to form a negative electrode slurry. The negative electrode slurry was applied on a copper foil current collector, dried at 85°C, cold-pressed, then cut, slit, and dried under vacuum at 120°C for 12 h to form a negative electrode plate.
(3) Preparation of electrolyte:
The electrolyte includes an organic solvent and a lithium salt, the organic solvent including ethylene carbonate EC and ethyl methyl carbonate (EMC) (volume ratio 3:7), and the lithium salt including 1 mol/L $LiPF_6$.
(4) Preparation of lithium-ion battery:
A polyethylene film (PE) was used as a separator. The positive electrode plate, separator, and negative electrode plate were stacked in order, with the separator placed between the positive electrode plate and negative electrode plate for separation, and then wound to obtain an electrode assembly. The electrode assembly was placed in an outer package shell, dried, injected with electrolyte, and subjected to vacuum sealing, standing, formation, shaping, and other processes to obtain a lithium-ion battery.

**Examples 2 to 6**

Lithium-ion batteries were prepared using a method similar to that in Example 1. Different from Example 1, Examples 2 to 6 adjusted the types of fluorinated polymers.

**Examples 7 to 9**

Lithium-ion batteries were prepared using a method similar to that in Example 1. Different from Example 1, Examples 7 to 10 adjusted the amounts of fluorinated polymers used.

**Example 10**

A lithium-ion battery was prepared using a method similar to that in Example 1. Different from Example 1, the preparation method of the negative electrode plate in Example 10 was as follows:
Oily anode: Multiple fluorinated polymers, a negative electrode active material artificial graphite, and a conductive agent carbon black were mixed well in a weight ratio of 2.4:97.3:0.3 in N-methylpyrrolidone (NMP) to form a negative electrode slurry. The negative electrode slurry was applied on a copper foil current collector, dried at 85°C, cold-pressed, then cut, slit, and dried under vacuum at 120°C for 12 h to form a negative electrode plate.

**Comparative Example 1**

A lithium-ion battery was prepared using a method similar to that in Example 1. Different from Example 1, Comparative Example 1 did not use multiple fluorinated polymers:

(1) Preparation of positive electrode plate:

A positive electrode active material, a conductive agent carbon black, and a binder polyvinylidene fluoride (PVDF) were mixed in a mass ratio of 97.5:0.7:1.8 in N-methylpyrrolidone (NMP) to form a positive electrode slurry. The positive electrode slurry was applied on an aluminum foil current collector, dried at 85°C, cold-pressed, then cut, slit, and dried under vacuum at 85°C for 4 h to form a positive electrode plate. The crystallinity of the binder polyvinylidene fluoride (PVDF) was 48%.

(2) Preparation of negative electrode plate:

Aqueous anode: A binder polyvinylidene fluoride, a negative electrode active material artificial graphite, a binder styrene-butadiene rubber, and a conductive agent carbon black were mixed well in a weight ratio of 0.4:97.3:2:0.3 in water to form a negative electrode slurry. The negative electrode slurry was applied on a copper foil current collector, dried at 85°C, cold-pressed, then cut, slit, and dried under vacuum at 120°C for 12 h to form a negative electrode plate. The crystallinity of the binder polyvinylidene fluoride (PVDF) was 48%.

**Comparative Example 2**

A lithium-ion battery was prepared using a method similar to that in Example 1. Different from Example 1, Comparative Example 2 adjusted the types of polymers.

**Comparative Example 3**

A lithium-ion battery was prepared using a method similar to Comparative Example 1. Different from Comparative Example 1, the preparation method of the negative electrode plate in Comparative Example 3 was as follows:

Oily anode: A binder polyvinylidene fluoride, a negative electrode active material artificial graphite, and a conductive agent carbon black were mixed well in a weight ratio of 2:97.3:0.7 in N-methylpyrrolidone (NMP) to form a negative electrode slurry. The negative electrode slurry was applied on a copper foil current collector, dried at 85°C, cold-pressed, then cut, slit, and dried under vacuum at 120°C for 12 h to form the negative electrode plate. The crystallinity of the binder polyvinylidene fluoride (PVDF) was 48%.

**Test section**

1. Test for capacity retention rate of lithium-ion battery

The lithium-ion batteries prepared in the examples and comparative examples were charged at a constant current of 1/3C to 3.8 V in a room temperature environment, left standing for 5 min, and then discharged at 1/3C to 2.0 V. The resulting capacity was recorded as the initial capacity C0. The battery was then transferred to a 60°C environment for storage. The above steps were repeated for the same battery, and the discharge capacity Cn of the battery was recorded every 30 days, with the capacity retention rate Pn of the battery every 30 days = Cn/C0 × 100%. The six point values P1, P2, ..., P6 were used as the ordinate and the corresponding storage days as the abscissa, to obtain a scatter plot of battery capacity retention rate versus storage days. The capacity retention rate data in Table 4 are data measured after 180 days of storage under the above test conditions, that is, the value of P6.

2. Test for direct current impedance of lithium-ion battery

The lithium-ion batteries prepared in the examples and comparative examples were charged at a constant current of 1/3C to 3.8 V at 25°C, and left standing for 5 min. The voltage V1 was recorded. Then, the battery was discharged at 1/3C for 30s, and the voltage V2 was recorded. The internal resistance DCR1 of the battery after the first cycle was (V2 - V1)/(1/3C). The battery was then transferred to a 60°C environment for storage. The above steps were repeated for the same battery, and the internal resistance DCRn (n = 1, 2, 3, ..., 6) of the nth cycle of the battery was recorded. The six point values DCR1, DCR2, DCR3, ..., DCR6 were used as the ordinate and the corresponding cycle numbers as the abscissa, to obtain a curve of battery discharge DCIR versus storage days.

The internal resistance increase rate of battery in Table 4 = (DCRn - DCR1)/DCR1 × 100%, and the data in Table 4 are data measured after 180 days of storage under the above test conditions.

Test results

The test results are shown in Tables 1 to 4.

**Table 1**

| Component | First fluorinated polymer | | | | |
|---|---|---|---|---|---|
| | Monomer | Molecular Weight ($10^4$ g/mol) | Glass transition temperature $T_{g1}$ (°C) | Crystallinity $X_{c1}$ (%) | Cold crystallization temperature $T_{c1}$ (°C) |
| Polymer A1 | 91% vinylidene fluoride + 9% perfluoropropylene | 60 | 20 | 25 | 90 |
| Polymer A2 | 87% vinylidene fluoride + 13% perfluoropropylene | 70 | 18 | 20 | 80 |
| Polymer A3 | 81% vinylidene fluoride + 15% perfluoropropylene +4% tetrafluoroethylene | 60 | 18 | 10 | 60 |
| Polymer A4 | 78% vinylidene fluoride + 22% perfluoropropylene | 70 | 15 | 20 | 40 |
| Polymer A5 | 82% vinylidene fluoride + 13% perfluoropropylene + 5% monosubstituted sulfonic acid ethylene | 60 | 15 | 18 | 50 |
| Comparative polymer A6 | 100% vinylidene fluoride | 80 | 40 | 50 | 140 |

**Table 2**

| Component | Second fluorinated polymer | | | | |
|---|---|---|---|---|---|
| | Monomer | Molecular weight ($10^4$ g/mol) | Glass transition temperature $T_{g2}$ (°C) | Crystallinity $X_{c2}$ (%) | Cold crystallization temperature $T_{c2}$ (°C) |
| Polymer B1 | 100% vinylidene fluoride | 80 | 35 | 35 | 125 |
| Polymer B2 | 95% vinylidene fluoride + 5% tetrafluoroethylene | 80 | 40 | 40 | 130 |
| Polymer B3 | 99% vinylidene fluoride + 1% monosubstituted carboxyl ethylene | 80 | 38 | 50 | 135 |
| Comparative polymer B4 | 90% vinylidene fluoride + 10% perfluoropropylene | 60 | 18 | / | / (no crystalline peak) |

**Table 3**

| First fluorinated polymer | Second fluorinated polymer | $X_{c2}$ - $X_{c1}$ | ($X_{c2}$ - $X_{c1}$)/$X_{c1}$ | $T_{c2}$ - $T_{c1}$ | ($T_{c2}$ - $T_{c1}$)/$T_{c1}$ |
|---|---|---|---|---|---|
| Polymer A1 | Polymer B1 | 10 | 40% | 35 | 39% |
| Polymer A2 | Polymer B2 | 20 | 100% | 50 | 63% |
| Polymer A3 | Polymer B3 | 40 | 400% | 75 | 125% |
| Polymer A4 | Polymer B1 | 15 | 75% | 85 | 213% |
| Polymer A5 | Polymer B2 | 22 | 122% | 80 | 160% |
| Polymer A1 | Polymer B3 | 25 | 100% | 45 | 50% |
| Comparative polymer A6 | Comparative polymer B4 | / | / | / | / |

**Table 4**

| No. | Positive electrode plate | | | | | Negative electrode plate | | | | | Battery performance | |
|---|---|---|---|---|---|---|---|---|---|---|---|---|
| | First fluorinated polymer | | Second fluorinated polymer | | Total mass content of multiple fluorinated polymers | First fluorinated polymer | | Second fluorinated polymer | | Total mass content of multiple fluorinated polymers | Capacity retention rate (%) | DCIR (%) |
| | Type | Mass content | Type | Mass content | | Type | Mass content | Type | Mass content | | | |
| Example 1 | Polymer A1 | 0.40 % | Polymer B1 | 1.8% | 2.20% | Polymer A1 | 2.0% | Polymer B1 | 0.4% | 2.4% | 93.0 | 8 |
| Example 2 | Polymer A2 | 0.40 % | Polymer B2 | 1.8% | 2.20% | Polymer A2 | 2.0% | Polymer B2 | 0.4% | 2.4% | 93.5 | 7 |
| Example 3 | Polymer A3 | 0.40 % | Polymer B3 | 1.8% | 2.20% | Polymer A3 | 2.0% | Polymer B3 | 0.4% | 2.4% | 94.0 | 6 |
| Example 4 | Polymer A4 | 0.40 % | Polymer B1 | 1.8% | 2.20% | Polymer A4 | 2.0% | Polymer B1 | 0.4% | 2.4% | 93.0 | 7 |
| Example 5 | Polymer A5 | 0.40 % | Polymer B2 | 1.8% | 2.20% | Polymer A5 | 2.0% | Polymer B2 | 0.4% | 2.4% | 95.0 | 5 |
| Example 6 | Polymer A1 | 0.40 % | Polymer B3 | 1.8% | 2.20% | Polymer A1 | 2.0% | Polymer B3 | 0.4% | 2.4% | 95.0 | 5 |
| Example 7 | Polymer A1 | 1.00 % | Polymer B1 | 1.2% | 2.20% | Polymer A1 | 2.0% | Polymer B1 | 0.4% | 2.4% | 93 | 8 |
| Example 8 | Polymer A1 | 0.05 % | Polymer B1 | 2.0% | 2.05% | Polymer A1 | 2.0% | Polymer B1 | 0.4% | 2.4% | 95 | 5 |
| Example 9 | Polymer A1 | 0.40 % | Polymer B1 | 1.8% | 2.20% | Polymer Al | 4.0% | Polymer B1 | 1.0% | 5.0% | 96 | 7 |
| Example 10 | Polymer A1 | 0.40 % | Polymer B1 | 1.8% | 2.20% | Polymer A1 | 0.5% | Polymer B1 | 2.0% | 4.5% | 91 | 11 |
| Comparative Example 1 | None | None | None | None | None | None | None | None | None | None | 90.0 | 12 |
| Comparative Example 2 | Comparative polymer A6 | 0.40 % | Comparative polymer B4 | 1.8% | 2.20% | Comparative polymer A6 | 2.0% | Comparative polymer B4 | 0.4% | 2.4% | 90.0 | 11 |
| Comparative Example 3 | Comparative polymer A6 | 0.40 % | Comparative Polymer B4 | 1.8% | 2.20% | Comparative polymer A6 | 0.4% | Comparative Polymer B4 | 2% | 2.4% | 88 | 14 |
| | | | | | | | | | | | | |

From Table 4, it can be seen that the positive electrode plate and negative electrode plate of Comparative Example 1 do not include multiple fluorinated polymers. During the cycling of the lithium-ion battery, the electrode plates may undergo volume swelling, leading to the destruction of the interface and the formation of a new interface, which causes continuous interfacial side reactions, deteriorating the cycling performance and storage performance of the battery cell.

Although Comparative Examples 2 and 3 include polymers in the plates, these polymers cannot effectively form an in-situ gel on the surface of the active material, failing to effectively mitigate interfacial reactions, and their high impedance worsens the battery's kinetic performance.

The examples of the present application, by adding multiple fluorinated polymers to at least one of the positive electrode plate and the negative electrode plate, enable the first fluorinated polymer to form an in-situ gel on the surface of the solid-phase active material, forming a stable solid-liquid interface on the surface of the active material, reducing the risk of side reactions at the solid-liquid interface. However, the first fluorinated polymer is not conducive to binding between active materials, resulting in poor structural stability of the electrode plate. The second fluorinated polymer can enhance the binding strength between active materials, supporting the plate, thereby improving the structural stability of the electrode plate, and thus improving the cycling performance and storage performance of the battery cell.

Although illustrative embodiments have been shown and described, those skilled in the art should understand that the above embodiments are not to be construed as limiting the present application, and changes, substitutions, and modifications may be made to the embodiments without departing from the spirit, principles, and scope of the present application.

## Claims

1. An electrode plate, wherein the electrode plate comprises a current collector and a film layer disposed on at least one side of the current collector, the film layer comprising an active material and multiple fluorinated polymers,

   wherein among the multiple fluorinated polymers, one fluorinated polymer has a crystallinity denoted as $X_{c1}$%, and a cold crystallization temperature denoted as $T_{c1}$°C; and
   among the multiple fluorinated polymers, another fluorinated polymer has a crystallinity denoted as $X_{c2}$%, and a cold crystallization temperature denoted as $T_{c2}$°C,
   wherein the multiple fluorinated polymers satisfy: $20\% \leq (X_{c2} - X_{c1})/X_{c1} < 400\%$, and $30\% \leq (T_{c2} - T_{c1})/T_{c1} < 250\%$.

2. The electrode plate according to claim 1, wherein

$$40\% \leq (X_{c2} - X_{c1})/X_{c1} < 400\%;$$

   and
   optionally, $X_{c2} - X_{c1} \geq 10$; and further optionally, $10 \leq X_{c2} - X_{c1} \leq 45$.

3. The electrode plate according to claim 2, wherein $0 < X_{c1} \leq 28$; and/or $30 \leq X_{c2} \leq 50$.

4. The electrode plate according to any one of claims 1 to 3, wherein

$$35\% \leq (T_{c2} - T_{c1})/T_{c1} < 250\%;$$

   and
   optionally, $T_{c2} - T_{c1} \geq 25$; and further optionally, $25 \leq T_{c2} - T_{c1} \leq 100$.

5. The electrode plate according to claim 4, wherein
   further optionally, $35 < T_{c1} \leq 100$; and/or $115 \leq T_{c2} \leq 140$.

6. The electrode plate according to any one of claims 1 to 5, wherein each fluorinated polymer among the multiple fluorinated polymers independently comprises at least one of a compound represented by formula (AI) to a compound represented by formula (AIII),

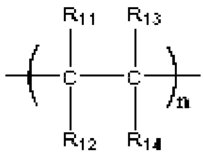 formula (AI), 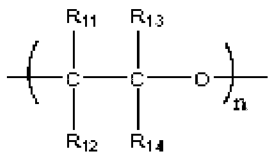 formula (AII),

wherein in formula (AI) and formula (AII), $R_{11}$, $R_{12}$, $R_{13}$, and $R_{14}$ each independently comprise a hydrogen atom, a fluorine atom, a chlorine atom, a bromine atom, a substituted or unsubstituted C1-C3 alkyl, or a substituted or unsubstituted C1-C3 alkoxy, and at least one of $R_{11}$, $R_{12}$, $R_{13}$, and $R_{14}$ comprises a fluorine atom;

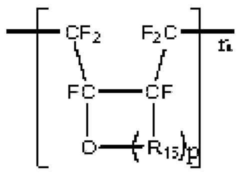 formula (AIII),

wherein in formula (AIII), $R_{15}$ comprises a single bond or a substituted or unsubstituted C1-C3 alkyl;
p is selected from positive integers from 1 to 3; and
n is selected from positive integers from 1000 to 30000.

**7.** The electrode plate according to any one of claims 1 to 6, wherein

among the multiple fluorinated polymers, one fluorinated polymer has a molecular weight of $W_1$ g/mol,
among the multiple fluorinated polymers, another fluorinated polymer has a molecular weight of $W_2$ g/mol, the multiple fluorinated polymers satisfy: $0 < W_1/W_2 < 1$; and
optionally, $2.0\times10^5 \leq W_1 \leq 1.0\times10^6$ and $5.0\times10^5 \leq W_2 \leq 1.2\times10^6$.

**8.** The electrode plate according to any one of claims 1 to 7, wherein based on a total mass of the film layer, a total mass content of the multiple fluorinated polymers is ≤ 5%; optionally, 0.05% to 5%;

optionally,
based on the total mass of the film layer, a mass content of the first fluorinated polymer is ≤ 4%; and
optionally,
based on the total mass of the film layer, a mass content of the second fluorinated polymer is ≤ 4%.

**9.** A battery comprising the electrode plate according to any one of claims 1 to 8.

**10.** The battery according to claim 9, wherein the electrode plate comprises a positive electrode plate, the positive electrode plate comprising a positive electrode current collector and a positive electrode film layer disposed on at least one side of the positive electrode current collector, and the positive electrode film layer comprising a positive electrode active material, a first fluorinated polymer, and a second fluorinated polymer;

optionally,
based on a total mass of the positive electrode film layer, a total mass content of the first fluorinated polymer and the second fluorinated polymer is 0.05% to 2.5%;
optionally,
based on the total mass of the positive electrode film layer, a mass content of the first fluorinated polymer is less than a mass content of the second fluorinated polymer;
further optionally,
based on the total mass of the positive electrode film layer, the mass content of the first fluorinated polymer is ≤ 2%; optionally, 0.05% to 2%; and optionally, 0.05% to 1%; and
further optionally,
based on the total mass of the positive electrode film layer, the mass content of the second fluorinated polymer is ≤ 2%; optionally, 1% to 2%; and optionally, 1.2% to 2%.

**11.** The battery according to claim 9 or 10, wherein the electrode plate comprises a negative electrode plate, the negative

electrode plate comprising a negative electrode current collector and a negative electrode film layer disposed on at least one side of the negative electrode current collector, and the negative electrode film layer comprising a negative electrode active material, a first fluorinated polymer, and a second fluorinated polymer;

optionally,
based on a total mass of the negative electrode film layer, a total mass content of the first fluorinated polymer and the second fluorinated polymer is 0.05% to 5%;
optionally,
based on the total mass of the negative electrode film layer, a mass content of the first fluorinated polymer is greater than a mass content of the second fluorinated polymer; or
based on the total mass of the negative electrode film layer, the mass content of the first fluorinated polymer is less than the mass content of the second fluorinated polymer;
further optionally,
based on the total mass of the negative electrode film layer, the mass content of the first fluorinated polymer is ≤ 4%; optionally, 0.5% to 4%; and
optionally,
based on the total mass of the negative electrode film layer, the mass content of the second fluorinated polymer is ≤ 4%; optionally, 0.4% to 2%.

**12.** An electric apparatus comprising the battery according to any one of claims 9 to 11.

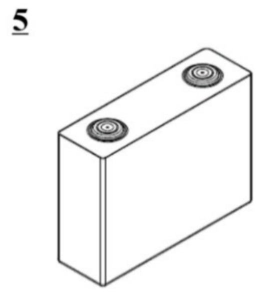


FIG. 1

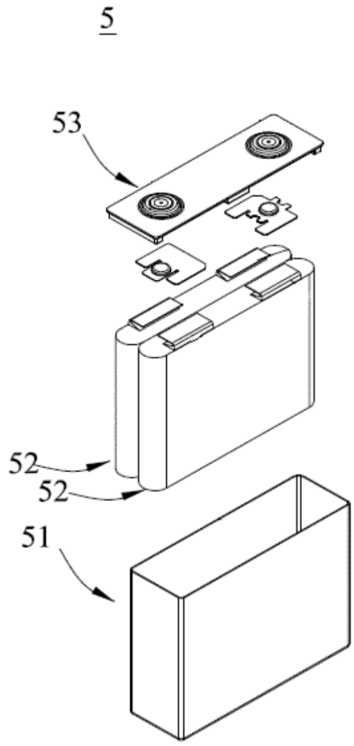


FIG. 2

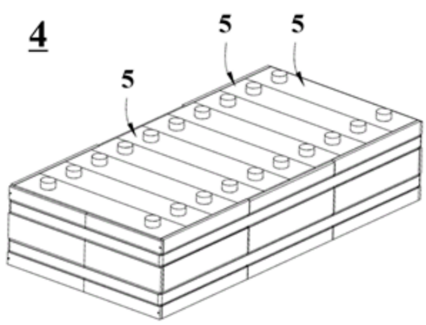


FIG. 3

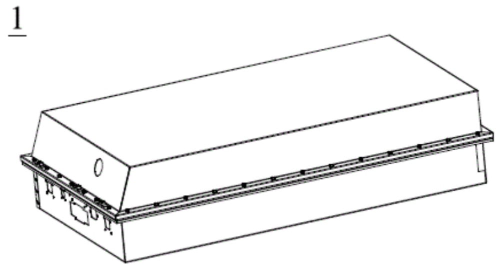


FIG. 4

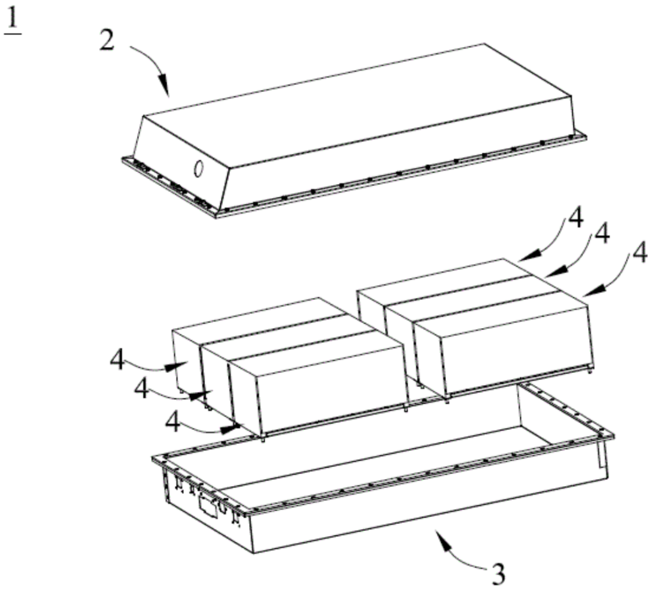


FIG. 5

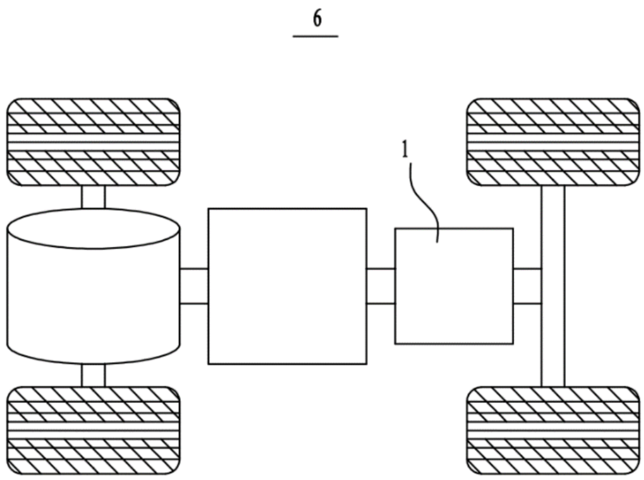


FIG. 6

## INTERNATIONAL SEARCH REPORT

International application No.
**PCT/CN2024/091420**

**A. CLASSIFICATION OF SUBJECT MATTER**

H01M 4/13(2010.01)i; H01M 4/62(2006.01)i

According to International Patent Classification (IPC) or to both national classification and IPC

**B. FIELDS SEARCHED**

Minimum documentation searched (classification system followed by classification symbols)

IPC:H01M4/-

Documentation searched other than minimum documentation to the extent that such documents are included in the fields searched

Electronic data base consulted during the international search (name of data base and, where practicable, search terms used)

CNTXT, VCN, ENTXTC, CNKI, ISI_Web of Science: 电池, 电极, 涂, 活性材料, 氟, 烯, 聚合物, 均聚物, 共聚物, 偏氟乙烯, 偏二氟乙烯, 六氟丙烯, 全氟丙烯, 四氟乙烯, 分子量, 结晶度, 冷结晶温度, battery, active, material, electrode, polymer, homopolymer, multipolymer, fluorin, ethylene, propylene, PVDF, PDF, HFP, fluoroethylene, hexafluoropropylene, tetrafluoro ethylene, molecular, weight, crystallinity, cold, crystallization, temperature

**C. DOCUMENTS CONSIDERED TO BE RELEVANT**

| Category* | Citation of document, with indication, where appropriate, of the relevant passages | Relevant to claim No. |
|---|---|---|
| X | CN 115004420 A (ARKEMA S.A.) 02 September 2022 (2022-09-02) description, paragraphs 39-104, and the embodiments | 1-6, 8-12 |
| Y | CN 115004420 A (ARKEMA S.A.) 02 September 2022 (2022-09-02) description, paragraphs 39-104, and the embodiments | 7 |
| Y | CN 115133035 A (CONTEMPORARY AMPEREX TECHNOLOGY CO., LTD.) 30 September 2022 (2022-09-30) description, paragraphs 54-150 | 7 |
| A | CN 104053687 A (DAIKIN INDUSTRIES, LTD.) 17 September 2014 (2014-09-17) entire document | 1-12 |
| A | CN 111194495 A (DAIKIN INDUSTRIES, LTD.) 22 May 2020 (2020-05-22) entire document | 1-12 |
| A | CN 116507647 A (KUREHA CORP.) 28 July 2023 (2023-07-28) entire document | 1-12 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **17 July 2024** | **24 July 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2024/091420**

**C. DOCUMENTS CONSIDERED TO BE RELEVANT**

| Category* | Citation of document, with indication, where appropriate, of the relevant passages | Relevant to claim No. |
|---|---|---|
| A | EP 0064389 A1 (E. I. DU PONT DE NEMOURS AND COMPANY) 10 November 1982 (1982-11-10)<br>entire document | 1-12 |

Form PCT/ISA/210 (second sheet) (July 2022)

**INTERNATIONAL SEARCH REPORT**
**Information on patent family members**

International application No.
**PCT/CN2024/091420**

| Patent document cited in search report | Publication date (day/month/year) | Patent family member(s) | Publication date (day/month/year) |
|---|---|---|---|
| CN 115004420 A | 02 September 2022 | WO 2021152267 A1 | 05 August 2021 |
| | | EP 4097781 A1 | 07 December 2022 |
| | | FR 3106703 A1 | 30 July 2021 |
| | | FR 3106703 B1 | 22 July 2022 |
| | | JP 2023512026 A | 23 March 2023 |
| | | KR 20220133272 A | 04 October 2022 |
| | | US 2023084563 A1 | 16 March 2023 |
| CN 115133035 A | 30 September 2022 | None | |
| CN 104053687 A | 17 September 2014 | JP 2013229337 A | 07 November 2013 |
| | | WO 2013111822 A1 | 01 August 2013 |
| | | JP 2013219016 A | 24 October 2013 |
| | | JP 5573980 B2 | 20 August 2014 |
| | | KR 20140112538 A | 23 September 2014 |
| | | KR 101599658 B1 | 03 March 2016 |
| | | US 2015017532 A1 | 15 January 2015 |
| | | US 9343744 B2 | 17 May 2016 |
| CN 111194495 A | 22 May 2020 | WO 2019087652 A1 | 09 May 2019 |
| | | TW 201923003 A | 16 June 2019 |
| | | TWI 753208 B | 21 January 2022 |
| | | KR 20200079516 A | 03 July 2020 |
| | | KR 102369813 B1 | 03 March 2022 |
| | | JPWO 2019087652 A1 | 09 July 2020 |
| | | JP 6863470 B2 | 21 April 2021 |
| | | US 2020243862 A1 | 30 July 2020 |
| | | US 11742491 B2 | 29 August 2023 |
| | | EP 3680969 A1 | 15 July 2020 |
| | | EP 3680969 A4 | 31 March 2021 |
| CN 116507647 A | 28 July 2023 | EP 4366021 A2 | 08 May 2024 |
| | | WO 2022114044 A1 | 02 June 2022 |
| | | KR 20240037378 A | 21 March 2024 |
| | | JPWO 2022114044 A1 | 02 June 2022 |
| | | JP 2024063151 A | 10 May 2024 |
| | | KR 20230096068 A | 29 June 2023 |
| | | EP 4253431 A1 | 04 October 2023 |
| | | EP 4253431 A4 | 29 May 2024 |
| EP 0064389 A1 | 10 November 1982 | ATE 16715 T1 | 15 December 1985 |
| | | NO 821434 L | 02 November 1982 |
| | | NO 160795 B | 20 February 1989 |
| | | NO 160795 C | 31 May 1989 |
| | | BR 8202395 A | 12 April 1983 |
| | | JPS 57185994 A | 16 November 1982 |
| | | JPH 0312155 B2 | 19 February 1991 |
| | | ZA 822935 B | 28 December 1983 |
| | | AU 8307582 A | 11 November 1982 |
| | | AU 562734 B2 | 18 June 1987 |
| | | DE 3267660 D1 | 09 January 1986 |
| | | EP 0064389 B1 | 27 November 1985 |
| | | CA 1208166 A | 22 July 1986 |
| | | ZA 8202935 B | 28 December 1983 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202311460439